# EUROPEAN PATENT SPECIFICATION

(11) **EP 4 610 788 B1**
(45) Date of publication and mention of the grant of the patent: **19.08.2026**
(21) Application number: 24160869.4
(22) Date of filing: 01.03.2024
(51) Int. Cl.: G06F 3/01

(54) **A MULTIMODAL HAPTIC DEVICE FOR RENDERING CUTANEOUS AND KINESTHETIC TACTILE CUES OF A TARGET, AND METHOD FOR RENDERING CUTANEOUS AND KINESTHETIC TACTILE CUES OF A TARGET**
MULTIMODALE HAPTISCHE VORRICHTUNG ZUR DARSTELLUNG KUTANER UND KINÄSTHETISCHER TAKTILER HINWEISE AUF EIN ZIEL UND VERFAHREN ZUR DARSTELLUNG KUTANER UND KINÄSTHETISCHER TAKTILER HINWEISE AUF EIN ZIEL
DISPOSITIF HAPTIQUE MULTIMODAL POUR RESTITUER DES REPÈRES TACTILES CUTANÉS ET KINESTHÉSIQUES D'UNE CIBLE

(43) Date of publication of application: 03.09.2025
(73) Proprietor: ECOLE POLYTECHNIQUE FEDERALE DE LAUSANNE (EPFL), 1015 Lausanne (CH)
(72) Inventor: METE, Mustafa, 1022 Chavannes-Renens (CH); JEONG, Haewon, 10884 Paju-Si (KR); PAIK, Jamie, 1006 Lausanne (CH)
(74) Representative: M. Zardi & Co S.A.

(56) References cited:
- WO-A1-2023/135493
- CHINELLO FRANCESCO ET AL: "A Modular Wearable Finger Interface for Cutaneous and Kinesthetic Interaction: Control and Evaluation", IEEE TRANSACTIONS ON INDUSTRIAL ELECTRONICS, IEEE SERVICE CENTER, PISCATAWAY, NJ, USA, vol. 67, no. 1, 1 January 2020 (2020-01-01), pages 706 - 716, XP011743773, ISSN: 0278-0046, [retrieved on 20190902], DOI: 10.1109/TIE.2019.2899551
- YOSHIDA KENTARO ET AL: "Pneumatic Concave Deformable Device and Finger Deformation-Based Evaluation for Hardness Perception", 2021 IEEE WORLD HAPTICS CONFERENCE (WHC), IEEE, 6 July 2021 (2021-07-06), pages 668 - 673, XP033963163, DOI: 10.1109/WHC49131.2021.9517139
- ASAD TIRMIZI ET AL: "On the role of cutaneous force in teleoperation: subtracting kinesthesia from complete haptic feedback", WORLD HAPTICS CONFERENCE (WHC), 2013, IEEE, 14 April 2013 (2013-04-14), pages 371 - 376, XP032431700, ISBN: 978-1-4799-0087-9, DOI: 10.1109/WHC.2013.6548437

## Description

### Field of application

The present invention relates to a multimodal haptic device for rendering cutaneous and kinesthetic tactile cues of a target.

The present invention further relates to a method for rendering cutaneous and kinesthetic tactile cues of a target by means of the above-mentioned device.

### Prior art

As known, softness is a characteristic of an object, material or body which is perceivable by touch. Softness depends on physical properties of the object to be gentle, yielding, and pliable to the touch, and is often associated with smoothness, flexibility, lack of hardness or rigidity. Softness is perceived through sensations such as smoothness, cushioning, or suppleness, in contrast with hardness, roughness, or stiffness.

Perceiving softness is important, sometimes vital, for well-being and complex social interactions among animals and humans. It helps taking decisions ranging from food selection in animals to the detection of medical anomalies in humans (see for instance: "A Gentsch, E Panagiotopoulou, A Fotopoulou, Active interpersonal touch gives rise to the social softness illusion. Curr. Biol. 25, 2392-2397 (2015)" or "A Pasqualotto, M Ng, ZY Tan, R Kitada, Tactile perception of pleasantness in relation to perceived softness. Sci. Reports 10, 11189 (2020)" or "R Kitada, M Ng, ZY Tan, XE Lee, T Kochiyama, Physical correlates of human-like softness elicit high tactile pleasantness. Sci. Reports 11, 16510 (2021)" or "H Yu, et al., Social touch-like tactile stimulation activates a tachykinin 1-oxytocin pathway to promote social interactions. Neuron 110, 1051-1067.e7 (2022)").

Information about object softness and compliance informs, for instance on
- food selection (see for instance in *Drosophila* and *howler monkeys* "YV Zhang, TJ Aikin, Z Li, C Montell, The basis of food texture sensation in drosophila. Neuron 91, 863-877 (2016)" or "KG Sanchez-Solano, et al., Non-visual senses in fruit selection by the mantled howler monkey (alouatta palliata). Primates 63, 293-303 (2022)"),
- grasp and squeeze capabilities (in *rhesus macaque monkeys,* see for "H Cu, L Lynch, K Huang, W Truccolo, A Nurmikko, Grasp-squeeze adaptation to changes in object compliance leads to dynamic beta-band communication between primary somatosensory and motor cortices. Sci. Reports 12, 6776 (2022)"),
- disease detection, such as cancer or tumors in humans through medical examination or palpation (see for instance "TD Lalitharatne, et al., Face mediated human-robot interaction for remote medical examination. Sci. reports 12, 12592 (2022)" or "D Doria, S Fani, A Giannini, T Simoncini, M Bianchi, Enhancing the localization of uterine leiomyomas through cutaneous softness rendering for robot-assisted surgical palpation applications. IEEE Transactions on Haptics 14, 503-512 (2021)").

Yet, our grasp of softness, including the neural pathways and underlying cognitive processes, remains incomplete.

Haptic display devices try to replicate the softness sensation of an object which is not directly available to the touch, because it is positioned remotely to the person interested in perceiving the softness, to make available to the person the same sensation of softness as it were perceived by directly touching the object, and ultimately retrieve from the sensation same information which are in generally retrieved from the person by physically touching the object. With the term "target", in the following description, it is meant an object, material or body, real or virtual, which is not directly touched by the user and for which the haptic display device has to render softness. In an attempt to improve the realism of the softness replicated (rendered), several aspects have been taken in consideration.

Previous research has demonstrated that the somatosensory system leverages both cutaneous and kinesthetic cues for the sensation of softness. Factors such as contact area, depth, and force play a particularly critical role.

Psychological and neuroscience research explains the complexity of softness perception that incorporates multiple sensory modalities, cognitive processes, and interaction phases (see for instance "RS Johansson, JR Flanagan, Coding and use of tactile signals from the fingertips in object manipulation tasks. Nat. Rev. Neurosci. 10, 345-359 (2009)" or "L Willemet, K Kanzari, J Monnoyer, I Birznieks, M Wiertlewski, Initial contact shapes the perception of friction. Proc. Natl. Acad. Sci. 118 (2021)" or "V Vechev, et al., Tactiles: Dual-mode low-power electromagnetic actuators for rendering continuous contact and spatial haptic patterns in vr in 2019 IEEE Conference on Virtual Reality and 3D User Interfaces (VR). (IEEE), pp. 312-320 (2019)").

For instance, some studies assert that softness is cognitively perceived as a blend of kinesthetic and cutaneous cues (see for instance "MA Srinivasan, RH LaMotte, Tactual discrimination of softness. J. Neurophysiol. 73, 88-101 (1995)" or "A Bicchi, EP Scilingo, D De Rossi, Haptic discrimination of softness in teleoperation: the role of the contact area spread rate. IEEE Transactions on Robotics Autom. 16, 496-504 (2000)" or "EP Scilingo, M Bianchi, G Grioli, A Bicchi, Rendering softness: Integration of kinesthetic and cutaneous information in a haptic device. IEEE Transactions on Haptics 3, 109-118 (2010)" or "K Yoshida, et al., Pneumatic concave deformable device and finger deformation-based evaluation for hardness perception in 2021 IEEE World Haptics Conference (WHC). (IEEE), pp. 668-673 (2021)" or "J Park, Y Oh, HZ Tan, Effect of cutaneous feedback on the perceived hardness of a virtual object. IEEE Transactions on Haptics 11, 518-530 (2018)" or "C Dhong, , et al., Role of indentation depth and contact area on human perception of softness for haptic interfaces. Sci. advances 5, eaaw8845 (2019)").

While pressure and skin deformation predominantly influence softness sensing, factors such as
- vision (see for instance "N Goda, I Yokoi, A Tachibana, T Minamimoto, H Komatsu, Crossmodal association of visual and haptic material properties of objects in the monkey ventral visual cortex. Curr. Biol. 26, 928-934 (2016)" or "Y Ujitoko, T Kawabe, Perceptual judgments for the softness of materials under indentation. Sci. Reports 12, 1761 (2022)" or "M Cavdan, K Drewing, K Doerschner, The look and feel of soft are similar across different softness dimensions. J. Vis. 21, 20 (2021)",
- temperature (see for instance "ZY Tan, CM Choo, Y Lin, HN Ho, R Kitada, The effect of temperature on tactile softness perception. IEEE Transactions on Haptics 15, 638-645 (2022)") and
- prior experience or memory (see for instance "A Metzger, K Drewing, Memory influences haptic perception of softness. Sci. Reports 9, 14383 (2019)") play also a role.

Moreover, despite varying perceptual performance among different fingers in softness discrimination (see "AC Zoeller, K Drewing, A systematic comparison of perceptual performance in softness discrimination with different fingers. Attention, Perception, & Psychophys. 82, 3696-3709 (2020)"), factors such as
- contact area, indentation depth, and force play a particularly critical role in sensations experienced (see "A Moscatelli, et al., The change in fingertip contact area as a novel proprioceptive cue. Curr. Biol. 26, 1159-1163 (2016)"), which are abundant in mechanoreceptors in primates (as explained in "W Taube Navaraj, et al., Nanowire fet based neural element for robotic tactile sensing skin. Front. neuroscience 11, 501 (2017)").

A full understanding of softness perception, including its neural representation and the cognitive process behind it, remains elusive (see "R Kitada, et al., Brain networks underlying tactile softness perception: A functional magnetic resonance imaging study. NeuroImage 197, 156-166 (2019)" or "JH Kim, et al., Neural correlates of tactile hardness intensity perception during active grasping. PeerJ 9, e11760 (2021)").

For this reason, a haptic display device which is adapted to replicate the softness of the target on a body part, for instance on a fingertip, in the most reliable and realistic way is a strongly felt need.

Known haptic display device predominantly generate either
- pure kinesthetic (see for instance "S Mintchev, M Salerno, A Cherpillod, S Scaduto, J Paik, A portable three-degrees-of-freedom force feedback origami robot for human-robot interactions. Nat. Mach. Intell. 1, 584-593 (2019)") or
- cutaneous tactile feedback (see for instance "SB Schorr, AM Okamura, Three-dimensional skin deformation as force substitution: Wearable device design and performance during haptic exploration of virtual environments. IEEE transactions on haptics 10, 418-430 (2017)", "HA Sonar, AP Gerratt, SP Lacour, J Paik, Closed-loop haptic feedback control using a self-sensing soft pneumatic actuator skin. Soft Robotics 7, 22-29 (2020)", "X Yu, et al., Skin-integrated wireless haptic interfaces for virtual and augmented reality. Nature 575, 473-479 (2019)", "Y Liu, et al., Electronic skin as wireless human-machine interfaces for robotic vr. Sci. advances 8, eabl6700 (2022)" or "FH Giraud, S Joshi, J Paik, Haptigami: a fingertip haptic interface with vibrotactile and 3-dof cutaneous force feedback. IEEE Transactions on Haptics 15, 131-141 (2021)").

These devices render stiffness, shear forces, and vibrotactile stimuli, but fail to render softness due to their lack of control over both contact area and force.

Consequently, researchers have developed haptic softness displays, for instance for fingertip, with early versions using metallic telescopic cylinder arrays to cover the finger pad.

However, the rigid and discrete interaction with these devices cannot adequately conform to fingertips (or other body parts) compliance and shape.

Further haptic display devices, equipped with flexible/stretchable membranes driven by electric motors offer improved conformability and continuous contact (see "M Bianchi, A Serio, Design and characterization of a fabric-based softness display. IEEE Transactions on Haptics 8, 152-163 (2015)." or "F Kimura, A Yamamoto, T Higuchi, Development of a 2-dof softness feeling display for tactile tele-presentation of deformable surfaces in 2010 IEEE international conference on robotics and automation. (IEEE), pp. 1822-1827 (2010)") and soft interfaces driven by pneumatic actuators (see "G Frediani, F Carpi, Tactile display of softness on fingertip. Sci. Reports 10, 20491 (2020)") and DEAs (see "G Frediani, et al., A soft touch: Wearable tactile display of softness made of electroactive elastomers. Adv. Mater. Technol. 6, 2100016 (2021)").

However, these devices suffer from some limitations: in an attempt to reproduce softness of the target, they directly couple a force applied by the body part to the haptic device with a size of a contact area to be offered by the haptic display device in order to replicate the softness. The effect is that the sensation of softness rendered does not correspond to the real softness perception.

Chinello Francesco et al: "A Modular Wearable Finger Interface for Cutaneous and Kinesthetic Interaction: Control and Evaluation", ISSN: 0278-0046; Yoshida Kentaro et al: "Pneumatic Concave Deformable Device and Finger Deformation Based Evaluation for Hardness Perception", 2021, IEEE World Haptics Conference, XP033963163; ASAD Tirmizi et al: "On the role of cutaneous force in teleoperation: subtracting kinesthesia from complete haptic feedback", World haptic conference, XP032431700 are examples of haptic device as known.

The problem at the base of the present invention is to provide a haptic display device which is suitable to mimic the softness cues of a target with high realism, taking in consideration a plurality of information and mapping them onto a body part of user.

### Summary of the invention

The idea at the base of the present invention is to provide a device for rendering cutaneous cues and kinesthetic tactile cues of a target independently one from the other.

The device is configured so as the cutaneous cue(s), rendered on a body part of the user (a living being, in particular a human), does not alter the kinesthetic tactile cue(s) rendered on the same body part of the user, each type (cutaneous or kinesthetic tactile) of cues resulting therefore more reliable and realistic, i.e. closer or identical to the cue(s) which would have been perceived by the user in case of contact with a real object corresponding to the target rendered, and therefore overcoming the limitations that affect device as known. The idea is to provide a device of the type disclosed above, suitable to render the term cues in real time, and adapting the cues based on the movement of the body part onto the device. Therefore, the term cue is also used in plural form in the following description (cues), either when it is referred to the cutaneous cue or to the kinesthetic tactile cue, being all these cues changed (or changeable) in real time by the device.

Multimodal perception of both the cutaneous cues and kinesthetic tactile cues in the user is improved by the device as disclosed, for these reasons the device is also said multimodal haptic device with improved rendering. The effect of improving multimodal perception is not reached by means of a juxtaposition of means of the device rendering the different cues independently but, to the contrary, the different and decoupled cues are provided at a same body part of the user by means of components of the device interacting synergically and mechanically interoperating. In this respect, an actuator of the device is configured to render the cutaneous cues on the body part of the user and a movable unit is configured to support dynamically the actuator to render the kinesthetic tactile cues on the same body part, said configurations of parts (actuator and movable unit) being controlled by the device based on the features of the target to be rendered and on features of the body part of the user.

According to the solution idea given above, the technical problem is solved by a multimodal haptic device according to claim 1. Advantageous embodiments of the device are disclosed in the dependent claims 2-9.

The technical problem is also solved by a multimodal haptic device according to claim 10. Advantageous embodiments of the method are disclosed in the dependent claims 11-14.

The multimodal haptic device for rendering cutaneous and kinesthetic tactile cues of the target, includes:
- an actuator intended to be contacted by a body part of a user;
- a support movable unit in operative connection with the actuator, to move the actuator in one direction of a force F applied by the body part to the actuator or in an opposite direction.

The actuator includes a contact region, intended to receive said force F by the body part, and at least one adaptive region, arranged at least in part around the contact region.

In one embodiment, continuity is provided between the contact region and the adaptive region. For instance, a peripheral edge or portion of the adaptive region is overlapped to the contact region or it is connected to the contact region.

In one embodiment, the contact region starts flat.

The direction of the force F applied to the contact region is substantially perpendicular to the contact region.

The adaptive region is also flat at rest, or substantially flat at rest and/or substantially coplanar to the contact region.

The device further includes a controller configured to
- set a first actuation input for the actuator to raise at least part of said adaptive region with respect to the contact region, wherein, in use, the haptic softness tactile cue of the target is rendered by means of a surface of said at least part of the raised adaptive region contacting the user's body part.

The adaptive region is a mechanically complaint region, meaning that it is adapted to mechanically comply with the body part on which the softness has to be rendered. Mechanically compliance of the adaptive region is for instance obtained due to an increase in volume of the adaptive region, wherein the increased volume of the adaptive region due to actuation fills a space around the body part which was previously empty, therefore gently touching a portion of the body part which was not previously contacted by the adaptive region. Mechanically compliance of the adaptive region may be obtained by shape change, for instance by bulging. Mechanically compliance may be alternatively obtained by motion of the adaptive region from a position distant from the body part to a contact position, upon actuation. The adaptive region is mechanically compliant because it substantially does not apply a normal force to the body part but adapts to the shape thereof with the scope of stimulating the cutaneous perception with no or negligible pressure onto the portion of the body part which was not contacted before actuation. Such portion of the body part is an extension of the portion of the body part which contacts the contact region of the actuator. The adaptive region may also be said "soft adaptive region" since it is not intended to cause perceivable pressures of the body part but to the contrary to activate the modal perception concerned with cutaneous cues. When used the term "soft", therefore, it is not used to indicate a relative term but the feature of the actuator to be able to comply with the body part as explained above.

In one embodiment, the contact region is the only region receiving the force applied by the body part, meaning that the adaptive region is not interested by said force and may be entirely adapted around the contact region, to mechanically comply to the body part.

In another embodiment, or in use, also part of the adaptive region receives the force applied by the body part to the device, for instance since it remains partially crushed below the body part, and such part of the adaptive region remains substantially flat also after actuation, wherein the actuation has the effect of rendering another part of the adaptive region, which is free from the body part, mechanically compliant to the body part. In still another embodiment, also the contact region can become mechanically compliant upon actuation; for instance, the contact region may be flat or substantially flat at rest, and can for example bulge upon actuation of the actuator, for instance upon receiving a force applied by the body part. Several combinations are envisageable and the various embodiments described herein might be combined depending on the needs or circumstances, for example depending on the body parts to which a tactile cue is to be rendered, as will be detailed herein below.

The controller is also configured to drive the support movable unit to move the actuator in said at least one direction or opposite direction, wherein, in use, the haptic kinesthetic tactile cue(s) of the target is rendered by a force applied to the body part by the actuator in said opposite direction.

Advantageously, the cutaneous cue(s) is decoupled by the kinesthetic tactile cue(s), as will be further apparent from the following description.

The adaptive region comprises an inflatable-deflatable element, and the first actuation input is a first fluid pressure of the inflatable-deflatable element which is suitable to raise the at least part of the adaptive region.

According to different embodiments, a fluid or liquid is used as a medium to inflate the element. In this context, the use of a fluid or liquid, such as a gas or water, can further provide thermo-tactile haptic feedbacks to a body part of a user. The device may further include a thermal actuation unit configured to control the temperature of a fluid medium, such as liquid or a gas, to provide temperature cues to the user.

Thermal cues can be provided by the heat exchange between the fluid medium and the user's skin through the actuator. The temperature of the fluid medium stream can be achieved by mixing several fluid streams at specific temperatures. These fluids can be heated or cooled to specific temperatures, by using for instance Peltier elements, and can possibly be stored in buffer tanks.

In one preferred embodiment, the adaptive region may have the shape of a toroid. In the following description, the part of the adaptive region having toroidal shape is also said toroidal SPA (toroidal soft pneumatic actuator), to summaries with an acronym its relevant features. The toroid is a closed and curved shape having a central hole. The contact region of the actuator may be arranged in the central hole, closing it at the bottom. More precisely, the adaptive region is a half toroid, i.e. a toroid cut along a plane perpendicular to an axis of the central hole, and the contact region substantially lays on said plane. At rest, the (half) toroid is collapsed on itself whereas, substantially coplanar with the contact region and forming an extension thereof. Based on a pressure inflated in the adaptive region, a curvature of the toroid (and a height of the toroid in the opposite direction) is changed, offering contact surface with the body part which was previously (before actuation) free.

The toroid shape of the adaptive part may be obtained by means of a bottom membrane, a flat rigid mesh on the bottom membrane, a top membrane in fluidic communication with a tube for fluid flow, and a mask between the bottom and the top membranes. The mask includes a central hole wherein a portion of the bottom membrane is attached to a portion of the top membrane and a separation surface around the central hole for separating a remaining portion of the bottom membrane from a remaining portion of the top membrane, wherein the inflatable-deflatable region is formed by the remaining portion of the top membrane, and wherein the central contact region is formed by the portion of the top membrane. The top membrane are soft polymeric or elastomeric membranes, preferably silicon membranes.

Whereas a toroid has been found by the Inventors a suitable geometry for the inflatable-deflatable element, other shapes may be adopted. In other words, other elements, at least in part separate from the contact area at rest and arranged to fill a volume closer to the contact area, for instance based on inflation of a gas or injection of a liquid, may be adopted. Moreover, according to another embodiment not part of the present invention, the adaptive region is not inflatable and may be formed by a meta-material.

The support movable unit comprises a pouch motor arranged inside a prismatic joint, preferably an origami prismatic joint. The controller is configured to set a second fluid pressure in the pouch motor. Due to the second fluid pressure, the actuator moves in said at least one direction or opposite direction.

In an embodiment not claimed by the present invention, the support movable unit may be implemented in a different way, adopting mechanical, pneumatic or electronic means, to cite some, in replacement of the pouch motor and/or in replacement of the prismatic joint. In the following, an embodiment including the pouch motor is disclosed since particularly light and therefore advantageous, for instance when the device is worn, for example on one or more fingers as non-limiting body parts. In this respect, the description and the drawings are mainly given with reference to fingertip(s) as a body part but the device as disclosed is as well suitable to render softness on feet, hands or any other body part of a human being or living being based on adaptations of the device as disclosed, that the person skilled in art can understand.

The controller is configured to process the first pressure and the second pressure of, respectively, the toroidal SPA and the pouch motor.

The controlled is in particular configured to implement the control based on all, or combinations of,
- the force applied by the body part of the user;
- an indentation depth of the actuator along said direction
- parameters of the body part;
- characteristics of the target;
- characteristics of the actuator.

In case of a toroidal SPA, the characteristics of the actuator may be a thickness of the membrane forming the toroidal SPA and a minor radius of the toroidal shape. The Inventors carried our several experiments and tests with a toroidal SPA and a fingertip as a body part, for instance.

The body part parameters include a radius and a Young's module of the body part, the characteristics of the target include a stiffness and a Young's module of the target.

The steps for determining the first and second pressure are repeated in real time by the controller to adapt the device. These steps may be summarized as follow:
A) estimation of a contact area spread rate (also said in brief with an acronym CASR), which is a width of a theoretical area of the body part to be contacted by the actuator for rendering the cutaneous cue, and estimation of a stiffness, which is a theoretical force to be applied to the body part for rendering the kinesthetic tactile cue, based on the force applied by the body part of the user and on the indentation depth of the actuator, these last (force applied by the body part and indentation depth as measured by the actuator);
B) determination (calculation of a value in the controller) of the first fluid pressure based on the estimated contact area spread rate and determination (calculation of another value in the controller) of the second fluid pressure based on the estimated stiffness;
C) setting the first pressure as the first actuation input to raise the at least part of the adaptive region and driving the support movable unit by regulating said second pressure in the pouch motor. Here setting means that valves are controlled from the controller to setting the first pressure and the second pressure in the adaptive region and pouch motor.

The controller is configured to repeat said steps A) to C) to render softness cues in real time.

In particular, the controller repeats detection of the force applied by the body part of the user and indentation depth of the actuator at step C) (and preferably detection of other data, such as the actual area contacted by the body part), detects (by means of other sensors) the first and second pressures in the adaptive region and pouch motor and forwards this information back to step A) for further processing. For instance, contact area sensors may be included or associated to the actuator or to the device, so as the actual area contacted by the body part is measured and forwarded back to step A). In other words, parameters detected by means of the device during use, including the force applied by the body part, the indentation depth, the actual area contacted by the body part and other parameters when measurable, are used in a closed loop encompassing steps A-C, for rendering the cutaneous and kinesthetic tactile cues in real time.

Step A) is estimated based on two mathematical models. An example of these models is given in the detailed description, under "Contact area model" and "Stiffness convertion model", with reference to a fingertip as a body part.

Step B) is determined based on another mathematical model coupled to the device. An example of this models is disclosed in the detailed description under "Model for the haptic display device", with reference to the actuator with the inflatable-deflatable element having the toroidal shape and to the fingertip as the body part. Other models may be adopted in case the body part to be rendered is different and/or the haptic display device has a different configuration, in particular a different actuator.

In the embodiment as disclosed, the device includes an operatively connected force sensor, to detect the force (F) applied by the body part on the device, and a position sensor coupled to the support movable unit to detect the indentation depth. In an embodiment, the support movable unit comprises a prismatic joint, and the force sensor is arranged between the prismatic joint and the actuator. In the embodiment above, the device may include a first and second valve for controlling, respectively, a fluid flow inside the inflatable-deflatable region and the pouch motor, and a third and fourth valve for controlling, respectively, a fluid flow outside the inflatable-deflatable region and the pouch motor. One or more among the first to fourth valves may be a proportional valve.

As cited anticipated above, the technical problem at the base of the invention is also solved by a method for rendering cutaneous and kinesthetic tactile cues of a target.

The steps of the method include:
- contacting an actuator with a body part to which the cutaneous and kinesthetic tactile cues of the target have to be rendered, the actuator being arranged in operative connection with a support movable unit;
- moving the actuator in at least one direction of a force applied by said body part to the actuator;

the actuator includes an adaptive region arranged at least in part around a contact region, the adaptive region being substantially flat at rest, before contact of the body part with the actuator,
wherein a controller of the device executes the following steps upon contact between the body part and the actuator:
   - setting a first actuation input for the actuator, and raise at least part of the adaptive region with respect to the contact region wherein, in use, the haptic softness tactile cue of the target is rendered by means of a surface of said at least part of the raised adaptive region contacting the user's body part;
   - driving the support movable unit to move the actuator in said at least one direction or in an opposite direction with a force (F2), thereby providing a tactile kinesthetic cue to the body part. The force F2 is proportional to a indentation depth (as explained below).

The adaptive region comprises an inflatable-deflatable element and the controller sets a first pressure of a fluid in the inflatable-deflatable element to raise the adaptive region. The support movable unit comprises a pouch motor arranged inside a prismatic joint, preferably an origami prismatic joint, and the controller drives the support movable unit by regulating a second pressure of air inside the pouch motor.

More specifically, the controller controls in real time the first pressure and second pressures by processing $p 1 = f \left(A, F, p, \left[{K}_{B}\right]\right) ,$ and $p 2 = f \left(F, δ, k, \left[{K}_{B}\right]\right)$ where
- F is the force applied by the body part on the device, as measured by a force sensor associated therewith;
- δ is a length of movement of the actuator in said at least one direction due to said force applied F, also said indentation depth δ, the indentation depth δ being measured by a position sensor, coupled to the prismatic joint;
- K_{B} are body part parameters, including at least one of a radius and a Young's module of the body part;
- p and k are values estimated by an estimation module (based on models), p and k being representative of a theoretical softness of the target when touched by the body part, namely a contact area spread rate p and a stiffness k of the target.

The values p and k are estimated based on said fingertip parameters K_{B} and on characteristics of the target, namely a Young's modulus (E_{B}) and a stiffness (Kₛ) of the target.

The force F and the indentation depth δ, as detected, are feed forwarded to the estimation module to estimate new values of contact area spread rate p and a stiffness k of the target.

Advantageously, the target rendered with the method may be stationary, dynamic, homogeneous or heterogeneous surface of a virtual or real object. Advantageously, the device and method as disclosed render haptic softness of the target, for instance an object, a material or a body which is not directly available to the touch, stimulating realistically the modal perceptions of the user and indeed taking in input personal features of the user, such as fingertip or other body parts parameters. The device forms an "Interface" or a "Softness Rendering Interface" (this is the reasons why, in the following description the device is also identified, in brief, with the acronym "SORI"), since it is suitable to receive the the physical touch of a human, for instance the touch of fingertip(s) or hand or foot, and to stimulate a same perception of softness she/he would feel by directly touching the target, which is instead placed remote to the user and therefore not directly touchable.

Advantageously, the device quantitatively replicates softness sensations.

The device adapts to the individual properties of the body part and close the gap between actual softness of the target and the softness as perceived from prior art devices. Advantageously, the device offers a leap forward in understanding and accurately simulating softness perception, helps enhancing haptic technology and paves the way for deeper insights into the neuroscience. The device incorporates individual physical fingertip properties and model-based softness cue estimation and mapping to provide a highly personalized experience.

The method as disclosed render softness by the use of the device, and is suitable to quantitatively replicate the sensation of softness on stationary, dynamic, homogeneous, and heterogeneous surfaces. The device accurately renders the surfaces of both virtual and real objects, thereby presenting new opportunities across a range of fields, from teleoperation to medical technology. The method to render softness expedites psychological and neuroscience research to unlock the nature of softness perception.

### Brief description of the drawings

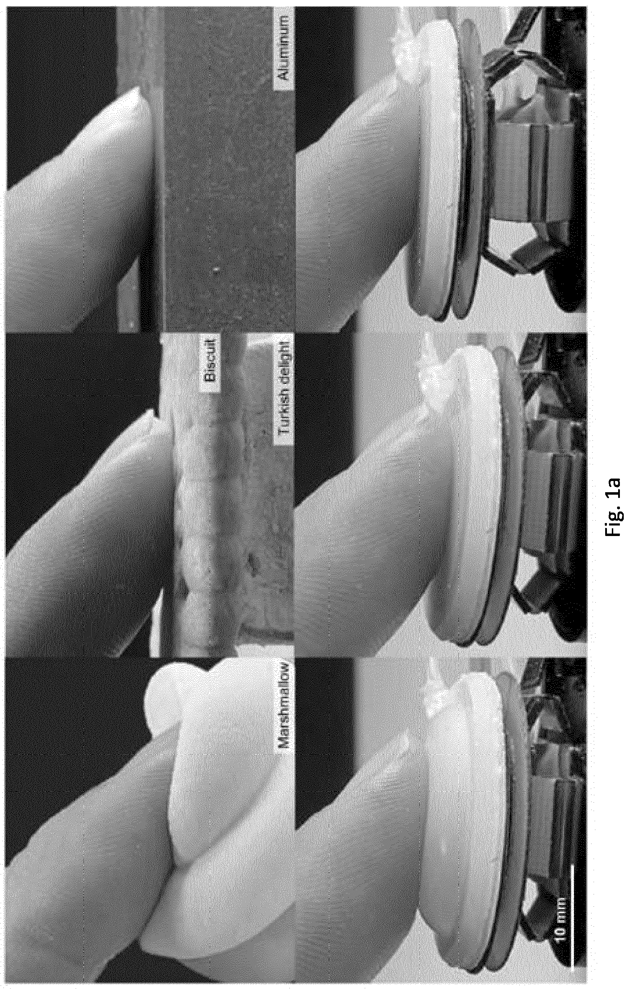

**Fig. 1a** is an image of a haptic display device for rendering softness cues as disclosed. The device may replicate tactile cues on fingertips to simulate both soft and hard homogeneous objects, as well as heterogeneous objects composed of layers with varying hardness. Examples of these objects are represented in a top row of Fig. 1a (a marshmallow, a biscuit layered on top of a Turkish delight and an aluminum block). A bottom row of Fig. 1a represents the device in three different use cases, where the softness of the three target objects is represented. The device includes a pneumatic actuator, a toroidal Soft Pneumatic Actuator (briefly said a toroidal SPA) and a motor, for instance a pouch-motor-driven coupled to an origami prismatic joint. When inflated, the toroidal SPA envelops the fingertip without applying significant normal force to the fingertip. This is very different from prior art devices where the device applies a relevant normal force to the fingertip in all the regions of the fingertip touched by the device. The prismatic joint restricts motion of the pneumatic actuator into a vertical axis (vertical is a direction perpendicular to a flat region of the pneumatic actuator suitable to support the fingertip, also said the contact region). The pouch-motor-driven origami generates a force to be imparted to the fingertip. The force is imparted in the vertical axis direction. The force applied in the contact region on the fingertip does not influence a pressure value of the toroidal SPA against the fingertip.
   Advantageously, in the device of the present invention, the force applied by the contact region on the fingertip (in the direction from the contact region to the fingertip) may be independent from the force applied by the fingertip to the contact region (in the direction from the fingertip to the contact region). For instance, in case the target to be rendered is dynamic, the force from the contact region to the fingertip is changed by the device to simulate the movement (dynamism) of the target. This is the case, for example, when the target is an area of a chest to be touched for auscultating the heart: this area moves due to heartbeats. The movement of the area is rendered on the contact area of the device by means of different forces applied to the fingertip, independently from the force applied by the fingertip toward the contact region. In this specific case, without limiting the scope of the invention, at least two different forces may be alternated to render heartbeats on the contact region one higher force to simulate the beat and a lower force to simulate absence of beat. Duration of each of said two forces is also varied to simulate the frequency of the heartbeats. On the other hand, the surface of the adaptive area which is in contact with the fingertip substantially depends on the force applied by the fingertip toward the contact region, to reproduce more realistically the sensation of cutaneous cues; in the example given, indeed, the cutaneous cues to render the contact with the chest is indeed substantially unaltered by the movement of the chest.
   Different shapes for the SPA (different from toroidal) may be adopted.
   The amount of fingertip surfaces enveloped by the haptic display device is a quantitative measure of the softness and is independent of the force applied by the supporting surface of the device.

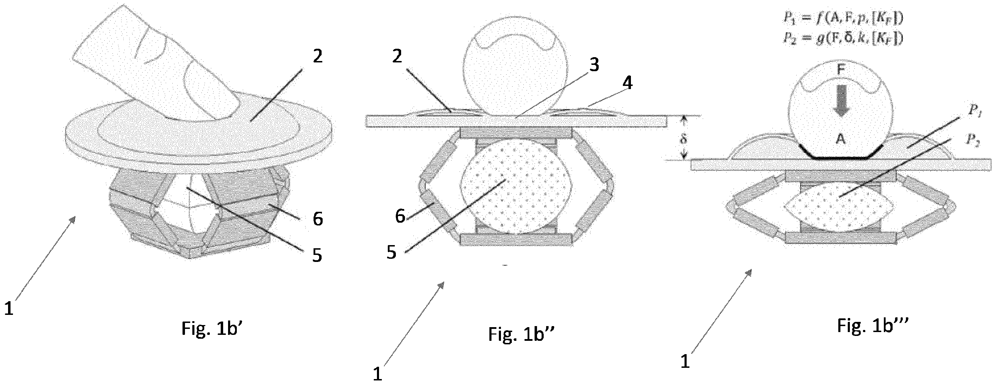

**Fig. 1b' to Fig. 1b‴** schematically represent how the device is configured to dynamically alter the contact area (A) and the force (F) imparted on the fingertip by controlling a pressure within the toroidal SPA, P1, and within the pouch motor, P2, in real-time, based on some parameters, in particular based on -the force applied by the fingertip onto the device (in the flat contact region), -an indentation depth (δ), which is a measure of a displacement of the flat contact region along the vertical axis, when said force is applied -physical fingertip parameters K_{F}, -target contact area spread rate (p, or CASR), -stiffness (k).
   In particular, in Fig. 1b" the device is represented in a use stage wherein the fingertip applies substantially no force on the flat contact region, therefore the toroidal SPA is substantially flat. In Fig. 1b' and Fig. 1b" the device is represented, respectively, in perspective and front view, in a use stage wherein the fingertip applies a force on the flat contact region, therefore the toroidal SPA is partially enveloping the finger, in a region around the flat contact region, but with a normal force which is neglectable. The pouch motor and the toroidal SPA are independently controlled. The amount of air injected into the toroidal SPA and into the pouch motor are processed by a controller of the haptic display device, based on the parameters mentioned above, to render in the most realistic way the softness of the target.

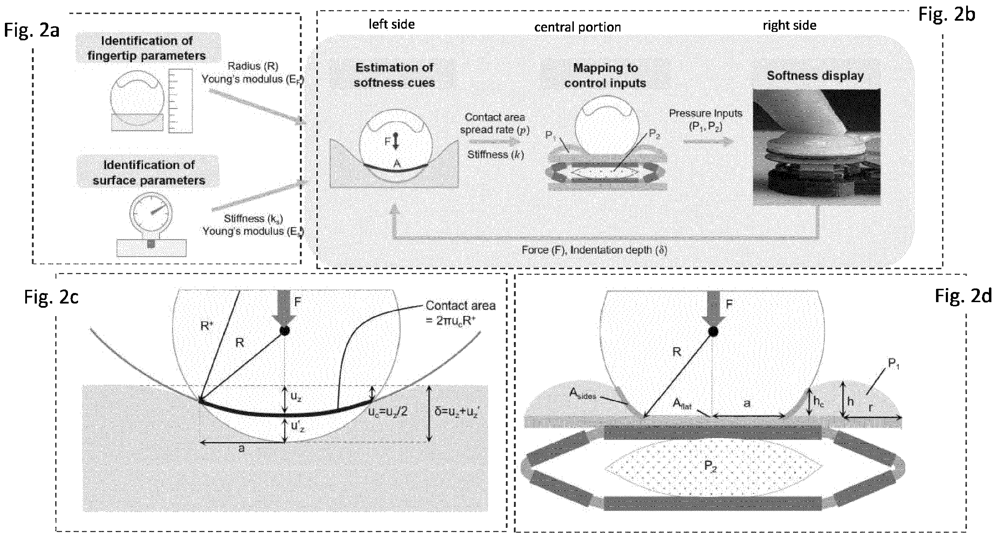

**Fig. 2a-2c** represent schematically the steps of a method to replicate softness as disclosed. In Fig. 2a, the physical parameters of a fingertip, such as its radius and modulus, are determined (or taken in input after being determined by another device) to accurately estimate the softness cues for the specific fingertip. This phase is carried out, for instance, at a remote system, and transmitted as an input to the haptic display device, which may be equipped with a communication interface, wireless or wired. In another embodiment, this phase is carried out by the haptic display device itself, which may be equipped with sensors to detect/processing the radius and modulus.
   Subsequently, (still **Fig. 2a****)** the properties of the target surface, such as stiffness and modulus are extracted (or taken in input after being determined by another device). Also, this phase, may be carried out at a remote system, and transmitted as an input to the haptic display device. However, nothing prevents that, for specific application, the haptic display device is equipped with sensors to detect/processing also the stiffness and modulus of the target surfaces, by means of a dedicated module which is not represented in the drawing.
   The identified fingertip parameters and surface parameters are used to estimate the softness cues, namely the contact area spread rate (CASR) and stiffness. This step is schematically represented in **Fig. 2b** (left side). The estimation is made mathematically, based on predetermined models, and provides as results a theoretical are of contact and a theoretical stiffness. The estimated values are used to determine, by means of the controller on board of the device, the pressure P1 and P2 to be set, respectively, into the toroidal SPA and the pouch motor (Fig. 2b, central portion). Also this determination is made mathematically, based on predetermined models for the actuator. At last (right hand side of Fig. 2b), the air is injected into the toroidal SPA and the pouch motor, so as pressures p1 and p2 are reached and the softness cues is rendered on the haptic device (on the actual hardware). Here, the fingertip may touch the device, applying a force onto the flat contact region. The force applied by the finger and the displacement of the flat contact region in the vertical axis is detected by means of sensory readings (respectively by a sensor coupled to the pneumatic actuator and a sensor coupled to the prismatic joint), and are returned back to the estimation step, thus closing the loop (back to Fig. 2b, left side). In other words, this time, the estimated values of the fingertip parameters and the target parameters are used together with the force applied by the fingertip and the indentation depth (displacement of the prismatic join along the vertical axis) to determine, by means of the controller on board of the device, the pressure P1 and P2 to be set into the toroidal SPA and the pouch motor.
**Fig. 2c** schematically represents a step of estimating the contact area spread rate (CASR) and stiffness, for instance by means of an extended Hertzian contact model, taking into account for non-linear fingertips on both soft and hard surfaces. This is a detail of what is processed in step of fig. 2b, left side.
**Fig. 2d** schematically represents a step of computing the required pressure inputs to generate the desired contact area spread rate (CASR) and stiffness by means of an analytical model. This is a detail of what is processed in step of Fig. 2b, central portion.
**Fig. 3** represents the prismatic joint and the pouch motor in a disassembled state; the pouch motor is empty (not inflated); air may be inflated through a tube connected in fluid communication with the pouch motor.

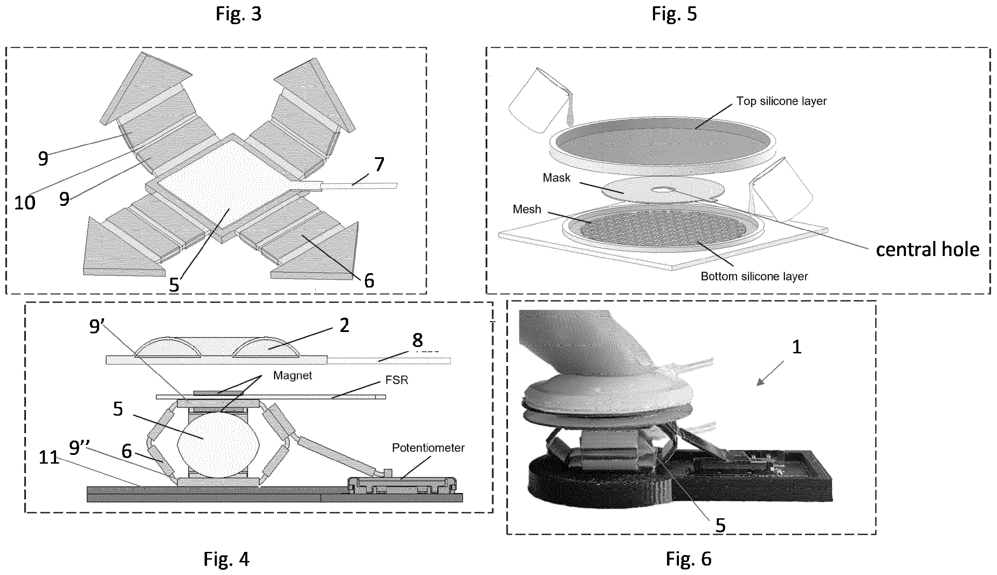

**Fig. 4** represents the prismatic joint and the pouch motor assembled together but disassembled from the actuator; a potentiometer is electrically connected with the prismatic joint and a top side face of the prismatic joint support two magnets between which a force resistive sensor (FSR) is sandwiched; at parts assembled, the FSR is arranged in correspondence of the flat contact region of the pneumatic actuator so as, the FRS measure the force applied by the fingertip of the flat contact region. Air may be inflated in the actuator through a tube connected in fluid communication with the actuator.
**Fig. 5** schematically represent a phase to manufacture the pneumatic actuator.
**Fig. 6** in a picture of a prototype of the device.
**Fig.** 7 is a diagram representing an average normal force of an indenter touching the pneumatic actuator as disclosed, versus pressure.
**Fig. 8a to 8d** includes diagrams representing an estimation and regeneration of contact area spread rate and stiffness. Fig. 8a represents identification of physical fingertip parameters: radius R, Young's modulus EF0, and load coefficient β. The actual (dashed lines in the graphic) and modeled (continues lines) CASR (contact area spread rate) of two fingers touching a flat PLA surface using the identified parameters are represented.
**Fig. 8b** represents a comparison of actual (dashed lines), estimated (continuous lines), and recreated CASR (finely dashed lines) CASR (contact area spread rate) for two fingertips touching homogeneous and non-homogeneous objects.
**Fig. 8c** represents a normalized CASR (contact area spread rate). The model is compared with normalized actual data for different fingers and materials.
**Fig. 8d** represent stiffness characterization of the materials and the stiffness range of the haptic display device (SORI).

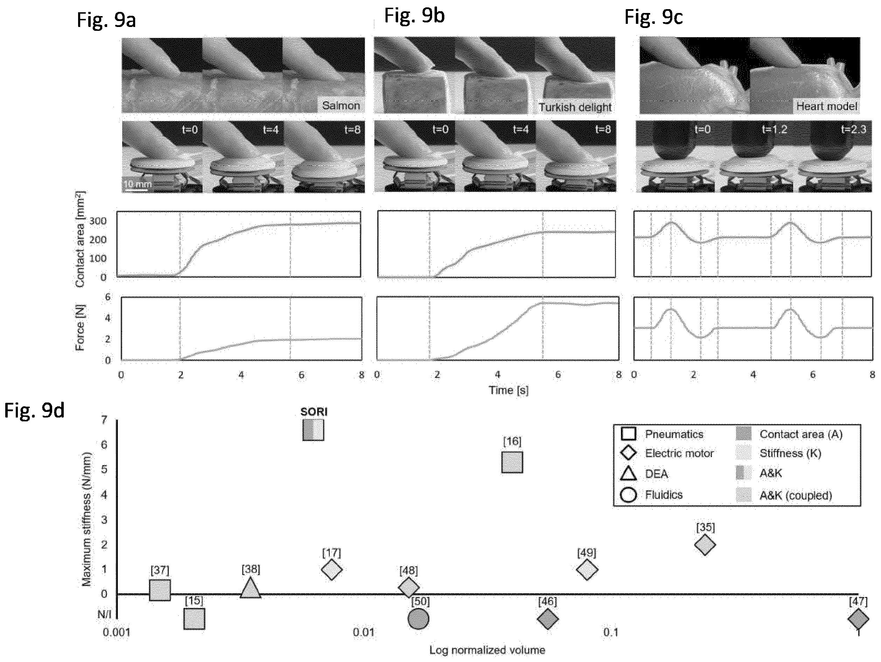

**Fig. 9a-9d** are diagrams representing the performance of the haptic display device. Fig. 9a to Fig. 9c represent real-time regeneration of both static and dynamic surfaces. The haptic display device successfully emulates the tactile sensation of a softer salmon fillet (Fig. 9a), a harder Turkish delight (Fig. 9b), and a heart model (Fig. 9c). In Fig. 9b, the haptic display device generates a smaller contact area while exerting a significantly higher force compared to Fig. 9a. In Fig. 9c, the position of the indenter remains stationary while the contact area and force change dynamically, aligning with the simulated heartbeat. Fig. 9d is a diagram comparing the haptic display device with other softness displays. An ideal softness display would possess almost zero volume and an infinite stiffness range, with independent control over the softness cues. The haptic display device as disclosed (which is indicated with SORI in fig. 9d) surpasses the capabilities of current state-of-the-art softness displays (which are indicated in fig. 9d with following reference numbers in square brackets: [15]: EP Scilingo, M Bianchi, G Grioli, A Bicchi, Rendering softness: Integration of kinesthetic and cutaneous information in a haptic device. IEEE Transactions on Haptics 3, 109-118 (2010); [16]: K Yoshida, et al., Pneumatic concave deformable device and finger deformation-based evaluation for hardness perception in 2021 IEEE World Haptics Conference (WHC). (IEEE), pp. 668-673 (2021); [17]: J Park, Y Oh, HZ Tan, Effect of cutaneous feedback on the perceived hardness of a virtual object. IEEE Transactions on Haptics 11, 518-530 (2018); [35]: M Bianchi, A Serio, Design and characterization of a fabric-based softness display. IEEE Transactions on Haptics 8, 152-163 (2015); [37]: G Frediani, F Carpi, Tactile display of softness on fingertip. Sci. Reports 10, 20491 (2020); [38]: G Frediani, , et al., A soft touch: Wearable tactile display of softness made of electroactive elastomers. Adv. Mater. Technol. 6, 2100016 (2021); [46]: F Kimura, A Yamamoto, T Higuchi, Development of a 2-dof softness feeling display for tactile tele-presentation of deformable surfaces in 2010 IEEE international conference on robotics and automation. (IEEE), pp. 1822-1827 (2010); [47]: F Kimura, A Yamamoto, Effect of delays in softness display using contact area control: rendering of surface viscoelasticity. Adv. Robotics 27, 553-566 (2013); [48]: T Endo, A Kusakabe, Y Kazama, H Kawasaki, Haptic interface for displaying softness at multiple fingers: Combining a side-faced-type multifingered haptic interface robot and improved softness-display devices. IEEE/ASME Transactions on Mechatronics 21, 2343-2351 (2016);
[49]: S Fani, S Ciotti, E Battaglia, A Moscatelli, M Bianchi, W-fyd: A wearable fabric-based display for haptic multi-cue delivery and tactile augmented reality. IEEE transactions on haptics 11, 304-316 (2017);
[50]: K Fujita, H Ohmori, A new softness display interface by dynamic fingertip contact area control in 5th World Multiconference on Systemics, Cybernetics and Informatics. pp. 78-82 (2001).).

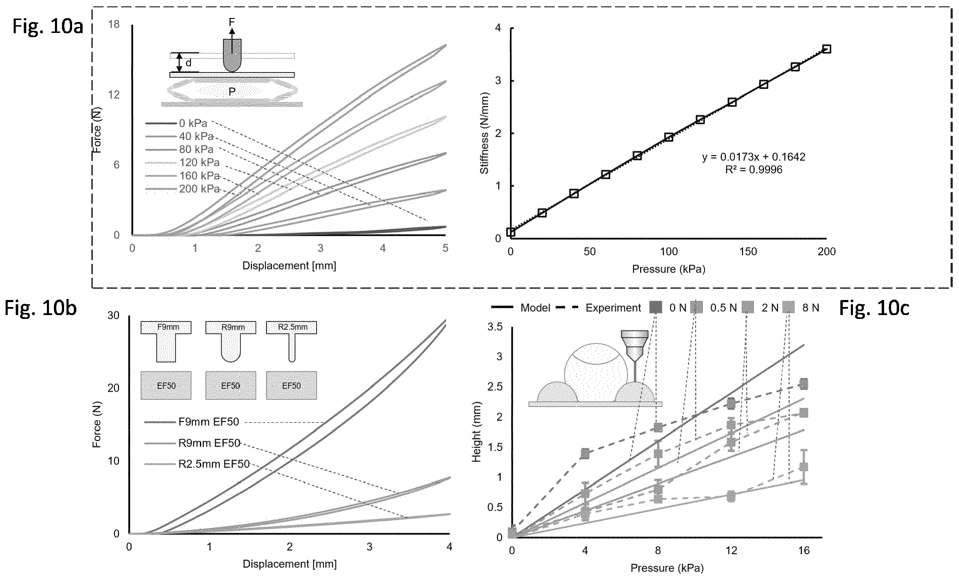

**Fig. 10a-10c** Are diagrams representing characterization of SORI (the haptic display device) and samples. Fig. 10a represents a force-displacement results of SORI at varying pouch pressure levels (left). A linear relation between the stiffness of SORI and pressure input (right) is observed. Fig. 10b represents force-displacement results of a cylindrical Ecoflex 00-50 sample when pressed with indenters of different geometry and dimension. Fig. 10c represents height-pressure characterization results of toroidal SPA under varying forces applied by a fingertip.

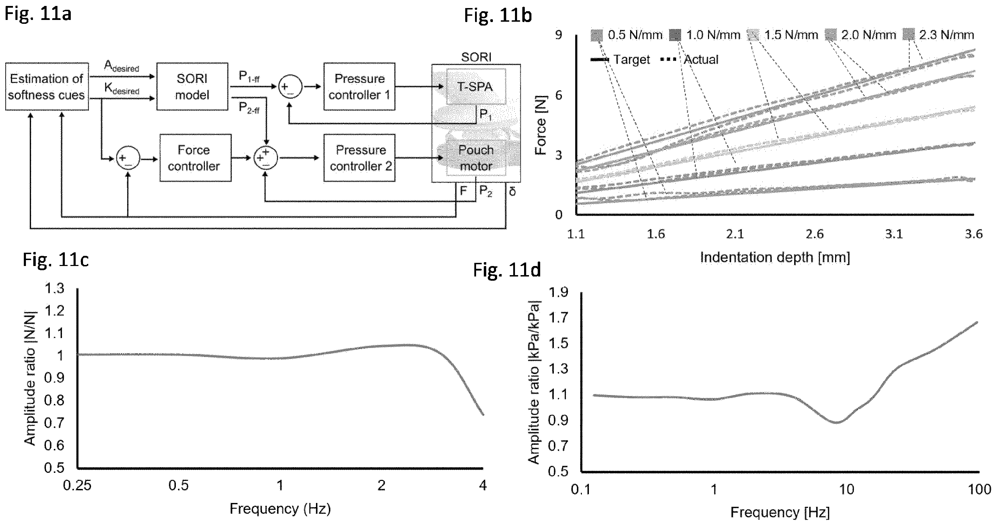

**Fig. 11a-11d** represents control scheme and performance of SORI. Fig. 11a is a control flowchart depicting softness regeneration through SORI. Fig. 11b represents a stiffness rendering results from SORI. Fig. 11c represents force control bandwidth. Fig. 11d represents pressure control bandwidth. The device includes a pneumatic control unit, achieving a pressure control bandwidth of 10 Hz and a stiffness control bandwidth of 4 Hz. This actuation bandwidth sufficiently stimulates type SA I *Merkel* cells, densely distributed in the fingertips and sensitive to low-frequency stimuli, 0.4-3Hz (as explained at "Ankit, , et al., Soft actuator materials for electrically driven haptic interfaces. Adv. Intell. Syst. 4, 2100061 (2022)" or "RS Dahiya, G Metta, M Valle, G Sandini, Tactile sensing-from humans to humanoids. IEEE transactions on robotics 26, 1-20 (2009)" or "L Wang, L Ma, J Yang, J Wu, Human somatosensory processing and artificial somatosensation. Cyborg Bionic Syst. (2021)"). These receptors respond to light touch, also referred to as discriminative touch, with optimal stimuli being indentation.

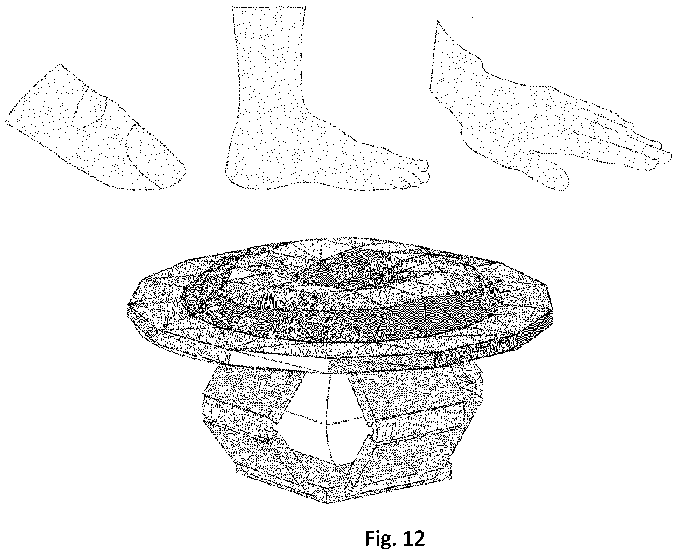

**Fig. 12** schematically represents embodiment(s) of the device as disclosed adapted to render the softness cues at fingertip, hand or foot.

### Detailed description of the invention

An embodiment of a haptic display device according to the present invention is given with reference to the annexed figures and globally indicated with reference number 1. The haptic display device 1 is suitable to render softness cues at the fingertip by independently controlling contact area and force. Decoupling control of contact area and force enables rendering both homogeneous surfaces of varying softness and non-homogeneous surfaces composed of stacked layers. Moreover, a more realistic sensation of softness is rendered.

Reference in the following description is made to a fingertip as a body part for easy of explanation only but the device as disclosed may be adapted to render softness cues to any body part, of a human or living being.

The haptic display device includes two main modules: a stiffness module and a contact area rendering module. In the embodiment as disclosed hereafter, the contact area rendering module is implemented by an actuator and the stiffness module is implemented by a support movable unit, and more particularity by means, respectively of a soft pneumatic actuator supported by a movable unit which is in turn coupled to an origami prismatic joint, such as those represented in Fig. 1b' to 1b‴. Also, this embodiment is for easy of explanation only, it does not limit the scope of protection of the claims and is disclosed only as one of a possible way to implement the device.

Details of the actuator and support movable unit according to this exemplary embodiment are given as follows.

### The actuator

The actuator 2 includes a toroidal soft pneumatic actuator (see Fig. 1b", 1b‴), briefly toroidal SPA, inflatable and deflatable. More precisely, the actuator 2 includes a "half-toroid SPA", since one side thereof is flat whereas the opposite side is substantially flat at rest and assume the shape of a "half-toroid" at an operative stage, when inflated. The expression "toroidal SPA" is used in the following description to mean half-toroid SPA. The actuator 2 may be configured to assume different shapes (different from toroidal), without departing from the scope of protection of the invention. Contrary to spherical or elliptical SPA as known from the cited prior art, the toroidal SPA facilitates fingertip area control without altering the curvature of the surface.

The toroidal SPA has minimal thickness to maximize achievable hardness.

The actuator 2 includes silicone rubber.

In one embodiment, the actuator includes four layers, as represented in Fig. 5: a top silicone membrane (layer), a mask below the top silicone membrane, a bottom silicone membrane (layer) below the mask, and a rigid mesh below the bottom silicone membrane. Upon inflation (by means of a tube 8 having an end connected between the top and bottom membranes, as represented in Fig. 4), the top membrane expands, for covering or enveloping at least in part the fingertip (Fig. 1b‴). The mask ensures separation between the top and bottom silicon membranes, leading to the formation of the half-toroid shape. The rigid mesh is embedded within the bottom membrane to form a contact region 3 (Fig. 1b") of the actuator 2. The contact region 3 remains flat also upon inflation, when the half-toroid shape is inflated (Fig. 1b‴). The contact region is a touch region, meaning that it is the region intended to receive the force actively applied by the user onto the actuator 2.

Silicone molding and paper masking techniques are preferably used in a manufacturing process to manufacture the top and bottom silicon membranes. In an embodiment, a Dragon Skin 30 (Smooth-On), combined with a surface tension diffuser (SLIDE-STD, Smooth-On), has been adopted as silicone material; this choice minimizes, in use, surface stiction between the toroidal SPA and the fingertip (or other body parts intended to perceive the cues).

Two 3D-printed annular molds may be used: an inner mold and an outer mold. The mesh maybe 3D-printed and secured inside the inner mold (the one at the bottom of Fig. 5) using double-sided tape on a Polyvinyl chloride (PVC) film. After pouring Dragon Skin 30 directly onto the mesh within the inner mold (from the container schematically represented on right hand side of Fig. 5), mechanical friction is enhanced by applying a curing step. In this way, a bottom surface with high rigidity is obtained for the actuator 2, providing resistance against deformation or buckling, and allowing the haptic display device 1 to keep a flat and thin profile during pouch inflation.

The bottom silicone membrane is cured for example for 5 minutes and then the mask is positioned at a center thereof. The mask is thin and annular. It remains in position without sinking and enables proper bonding between the bottom silicone membrane and the top silicon membrane. Subsequently, the outer mold (the one represented on top of Fig. 5) is position on top of the mask and the bottom silicon membrane, additional silicone is poured (step represented by the container on the left side of Fig. 5), and a curing process for the whole structure is applied, for instance for 4 hours. A tube 8 (Fig. 4), preferably rigid, is attached to the toroidal SPA using silicone adhesive. In one embodiment, the toroidal SPA prototype has a 26 mm diameter-larger than the average human fingertip diameter-while maintaining a compact and lightweight design. The toroidal SPA and the contact region 3 may have size, based on the body part on which the cues have to be rendered.

To mitigate stiction between the silicone and the mask layer, laser-cut copy paper as a masking layer is used. Laser-cut copy is a preferred alternative to other mask options such as cellophane tape and polyvinyl chloride (PVC) film.

The mask has a central hole. Therefore, the mask has an outer radius and an inner radius, which is the radius of the central hole. The central region 3 of the actuator 2 is at the central hole, since the top silicon membrane is attached to the bottom silicon membrane at the central hole of the mask.

The inner radius of the mask has been determined by the Inventors based on a minimum force threshold detectable by humans. Already cited studies ("HH King, R Donlin, B Hannaford, Perceptual thresholds for single vs. multi-finger haptic interaction in 2010 IEEE Haptics Symposium. (IEEE), pp. 95-99 (2010).") have shown that the minimum force detection threshold for fingertips varies between 10 mN and 90 mN across different individuals. For this threshold, an average value of 50 mN has been considered by the Inventors, and this results in a minimum contact diameter of approximately 6 mm when an average-sized fingertip (with an 18 mm diameter) touches a rigid flat surface (the contact region 3) with the minimum detectable force. A safety margin for fingertips with smaller diameters has been considered by selecting an inner diameter of 4 mm. An inner diameter between 6 mm and 2 mm may be, however, adopted. This size (range) has been chosen by the Inventors to ensure that the user does not perceive any inner circle (in correspondence of the contact region 3) when touching the inflated toroidal SPA. Furthermore, the outer diameter of the mask has been set to 22 mm, exceeding the average human fingertip diameter of 18 mm, to ensure thorough contact coverage while also maintaining an ergonomic design.

Dragon Skin 30 has been adopted for the silicone membranes rather than softer, highly stretchable alternatives. While the latter might achieve a broader range of contact areas, they tend to deform significantly under low-pressure conditions, necessitating high-resolution sensors and actuators. Furthermore, Dragon Skin 30 helps minimizing the membrane's thickness to generate a smaller normal force on the fingertip, enhancing conformability, and achieving the highest renderable hardness possible. At last, since, the risk of failure upon inflation increases as the thickness decreases, a thickness for the top silicon membrane has been set to 0.75 mm. With this thickness, the top silicon membrane is capable of withstanding pressures up to 30 kPa without breaking.

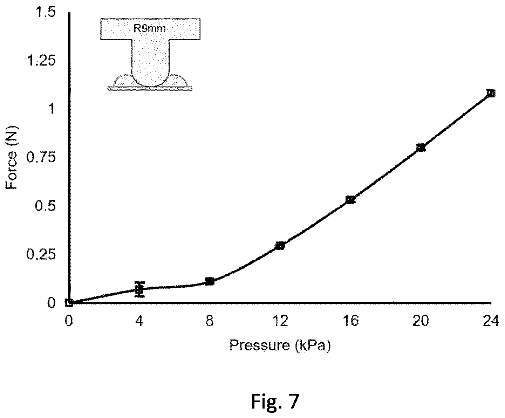

The normal force exerted by the toroidal SPA has been quantified on the fingertip at varying pressure levels. To do so, soft spherical indenter of Dragon Skin 10 with a diameter of 18 mm has been used to simulate the fingertip. The indenter was mounted on a universal testing machine (Instron 5965) and positioned to tangentially touch the toroidal SPA, ensuring consistent contact with the surface, in the contact region 3. The pressure was incrementally increased by 4 kPa steps up to 24 kPa, the maximum safe pressure to prevent the toroidal SPA from breaking. The force at each pressure level was recorded. This procedure was replicated three times to ensure reliability, and the average normal force versus pressure was plotted (Fig. 7). The normal force peaked at 1.08 N when the pressure reached 24 kPa. While this peak normal force is negligible for rendering harder materials, it sets a lower limit on the minimum renderable stiffness, which is approximately 0.22 ≈ 1.08/5 N/mm, when attempting to render very soft materials. While it is possible to further minimize this normal force by optimizing design parameters such as membrane thickness or by selecting a material that is softer and more stretchable, these modifications present challenges: a softer material would result in more deformation at the same pressure, necessitating more precise and accurate pressure control within a narrower pressure range. Additionally, the material would need to be durable enough to resist mechanical failure.

### The support movable unit

The support movable unit, used as a stiffness rendering module, according to one embodiment of the invention includes an origami prismatic joint 6 and a pouch motor. In an embodiment as disclosed, the origami prismatic joint 6 enables only one degree of freedom (1 DoF), in particular exclusive vertical movement (in an axial direction, perpendicular to the contact region 3), minimizing any undesired horizontal motion. In another embodiment, the origami prismatic joint 6 might enable more than one degree of freedom (multi DoF); this is useful in an attempt to accurately simulate real interactions with the target when, in use, significant non-vertical motions during the indentation are expected, for instance due to finger tremors, incorrect fingertip positioning and/or non-vertical forces. In this case (multy DoF), the impact of the non-vertical movements on softness perception has to be considered, to adjust stiffness across various axes for surface stiffness replication.

Furthermore, the origami prismatic joint 6 is configured to reduce friction, providing a smooth user experience. Inside the origami prismatic joint 6, the pouch motor generates the force output. The pouch motor is preferably integrated within the origami prismatic joint. The pouch motor has a high power-to-weight ratio, and the pouch motor therefore allows for a compact and lightweight design while delivering high-force output.

The origami prismatic joint 6 according to an embodiment is manufactured using a laminate production method. A 0.5 mm glass-reinforced epoxy laminate material (FR4) is preferably adopted for the rigid layers 9 (Fig. 3) of the joint 6, a 50 µm Kapton polyimide film for the flexible hinges 10 connecting the rigid layers 9, and a Poli-Melt 701 film for the adhesive layer, bonding the flexible hinges 10 and rigid layers 9 together.

The pouch motor, in one embodiment, is formed from thermoplastic polyurethane (TPU) coated fabric and a Teflon sheet. Initially, the Teflon sheet is laser-cut into the desired shape and positioned between the TPU sheets. The TPU sheets are then heat-pressed for instance for 30 seconds at 180°C with a pressure of 200 N. During this process, the TPU layer melts and bonds with the adjacent layers, except for where the Teflon sheets are. Subsequently, the surplus parts are trimmed, and the actuator is connected to a rigid air tube 7 (Fig. 3) using instant adhesive. This process results in a square flat pouch actuator (the pouch motor) with a 12 mm edge length, for instance. The pouch motor is then placed inside (at a center) of the origami prismatic joint 6 and secured with a small quantity of adhesive applied at a minimal point of contact. Finally, the structure is folded into its 3D shape (Fig. 4, for instance). In particular, the actuator 2 is mounted onto the origami prismatic joint 6, with a force-resistive sensor (Interlink FSR 402) positioned between them (still Fig. 4). To provide pre-compression to the FSR, two magnets (for intake Supermagnete S-08-0.75-STIC) are arranged, respectively, on a top surface of the FRS and on a bottom surface of a topmost rigid layer 9' of the origami prismatic joint 6, wherein a top surface of the layer 9' and a bottom surface of the FSR are faced and contact each other.

A position sensor (for instance as disclosed at "M Mete, J Paik, Closed-loop position control of a self-sensing 3-dof origami module with pneumatic actuators. IEEE Robotics Autom. Lett. 6, 8213-8220 (2021).") is coupled to the origami prismatic joint 6. The sensor includes a potentiometer (Alps Alpine RS08U111Z001). A PCB 11 support a bottommost rigid layer 9" of the origami prismatic joint 6 and a 3D-printed holder secures the origami prismatic joint 6 and potentiometer (Fig. 4).

Advantageously, in use, the toroidal SPA applies negligible normal force to the fingertip (or the body part concerned), therefore decoupling contact area and force cues; the former, the contact area, being concerned for rendering cutaneous cues independently from the force, and the latter, the force, being concerned for rendering the kinesthetic tactile cues, in a fully decoupled way although provided by the device by means of synergic cooperation of actuator and movable part, acting at same fingertip or same body part subject to the multimodal perception.

The design of toroidal SPA conforms to contours of a fingertip, enabling an (although negligible) pressure with continuous distribution. The pouch motor and the origami prismatic joint 6, at the bottom of the actuator restricts movement to the vertical axis, in a direction perpendicular to a support surface (the contact region 3) of the fingertip on the toroidal SPA, and exhibits negligible deformation under off-axis loading.

For rendering appropriately cues to the body part according to the present disclosure, an accurate analysis of features of the body part and of the target to be rendered is made. The "target" is an object, material or body, real or virtual, which is not directly touched by the fingertip of a user and for which the haptic display device has to render softness. In an attempt to improve the realism of the softness replicated (rendered), several aspects have been taken into consideration and processed in a method as herein disclosed.

The method is implemented into a controller of the device and therefore it is embedded therein. In an embodiment, at least some steps of the method, for instance those concerned with detection of parameters of the target and/or fingertip, are carried out in an external device, providing an output which is take in input from the device for rendering the cutaneous and kinesthetic tactile cues.

Among the advantages of the method and the device disclosed, rendering the cues is customized to the single user, since feature of the body part (for instance the fingertips) are taken on the single user. This is a great improvement, since softness perception varies among individuals due to biomechanical properties of their fingertips such as the shape, size, and elastic modulus.

To simulate behavior of different fingertips, the Inventors exposed different indenters to different forces and contact areas when pressed onto the same surface of the actuator 2 with exact indentation depth (See Fig. 10a-10c). Consequently, the stiffness and contact area spread rate (CASR) sensed by means of said experiment have been registered; they differ for fingers with varying physical properties.

As a first step of the method of softness regeneration (rendering), the fingertip physical parameters radius (R) and *Young's modulus* (E_{F}) are determined or considered (taken in input as processed by another device) to personalize the softness cues to be rendered, i.e. to match it to the physical properties of the user concerned.

Before reproducing softness cues, however, it is necessary to estimate them upon contact with the target surface. Softness cues means cutaneous cue and kinesthetic tactile cue. Thus, a *Young's modulus* and a stiffness of the contact surface (of the target) are determined or considered (taken in input as processed from another device) as a second step of the method.

Standardized *Shore Hardness* durometers to extract *Young's modulus* information of the contact surface of the target, aided by the hardness-to- *Young's modulus* conversion model (for instance based on "HJ Qi, K Joyce, MC Boyce, Durometer hardness and the stress-strain behavior of elastomeric materials. Rubber Chem. Technol. 76, 419-435 (2003)"), may be adopted. To acquire stiffness information of the contact surface of the target, a universal testing machine outfitted with a rigid spherical indenter may be adopted.

Subsequently, a comprehensive model is adopted to estimate the CASR (contact area spread ratio) and stiffness for any fingertip with varying properties by considering the identified fingertip and surface properties. The method assumes that the identified fingertip applies a force F to the contact region 3 of the actuator. The CASR (contact area spread ratio) and stiffness are theoretical values, processed according to mathematical models, and used to subsequent determination of pressures p1 and p2 for the actuator and pouch motor to render, respectively, cutaneous cue and kinesthetic tactile cue by means of a width of the contact surface between the actuator (element inflated) and the force applied by the pouch motor towards the fingertip.

An extended *Hertzian* contact model for non-rigid indenters on flat surfaces may be adopted (see for instance "A Fischer-Cripps, The hertzian contact surface. J. materials science 34, 129-137 (1999)"). Moreover, a non-linear finger pad model from Dzidek et. al. (see for instance "BM Dzidek, MJ Adams, JW Andrews, Z Zhang, SA Johnson, Contact mechanics of the human finger pad under compressive loads. J. The Royal Soc. Interface 14, 20160935 (2017)" may be incorporated into a contact mechanics model.

Based on this model, the method estimates the contact area and force on the fingertip (as explained with reference to Fig. 2b, left side).

Hereafter details of the modeling according to an embodiment are given.

### Modeling

### Contact area model

This model may be used to calculate a theoretical area (A in Fig. 2b, left side) of contact between the fingertip and the target surface, once is known the force and the indentation depth of the device which has to render softness cues of the target (in particular here cutaneous cue). The force is the one applied by the fingertip on the actuator and the indentation depth is the one of the support movable part, both sensed by the sensors on board the device itself. Moreover, intputs for the model are parameters of the fingertip and characteristics of the target.

The computation of the contact area between the fingertip, which is soft, i.e. not rigid, and the surface of the target, which is also soft, requires knowledge of both indentation depth and the shape of the deformed indenter (representing the fingertip) at different forces. These characteristics depend on the material properties of both the indenter and the surface. The model adopted ("A Fischer-Cripps, The hertzian contact surface. J. materials science 34, 129-137 (1999)") extends the Hertzian contact model to account for the interaction between a soft indenter and a soft surface. The adopted model provides a deformation representation for a spherical indenter based on Young's modulus of the indenter and the surface. According to the model, when a soft spherical indenter with a radius *R* is pressed onto a flat surface with a force F, the deformed indenter can be approximated as a rigid indenter with an effective radius *R*⁺ (see Fig. 2c), which is calculated as *R⁺=R* (1+*E_{I}***ES**), where E*_{S}** and *E_{I}** represent the effective *Young's modulus* of the contact surface and the soft indenter, respectively. The effective *Young's modulus* is defined by the equation E* = E/(1 - *v*²), where E is the *Young's modulus,* and v is the *Poisson's ratio.*

For the soft indenter, a non-linear finger pad modulus model may be adopted as provided by Dzidek et al. ("BM Dzidek, MJ Adams, JW Andrews, Z Zhang, SA Johnson, Contact mechanics of the human finger pad under compressive loads. J. The Royal Soc. Interface 14, 20160935 (2017)"), where *E_{I}**=*E_{F}**=*E*_{*F*O}*(1*+βF*). In this equation, *E_{F}*, E*_{*F*O}*, and *β* represent the secant *Young's modulus,* effective *Young's modulus,* and load coefficient, respectively.

According to the model proposes, the vertical displacement of the center of the fingertip with respect to the surface level, *δ*, is equal to *δ=u_{z}* + *u_{z},* where *u_{z}* and *u_{z}* are the vertical deformations of the surface and the fingertip respectively (Fig. 2c). The relation between the deformations depends on the modulus of the fingertip and the surface as follows ${u}_{z} / {u}_{z}^{′} = {E}_{F}^{∗} / {E}_{S}^{∗}$. Also, *u_{c},* the depth of the contact periphery, is equal to *u_{c} = u_{z}*/*2.* Thus, the indentation depth of the virtual rigid indenter *u_{z}* and the radius of the circle of contact *a* is follows: ${u}_{z}^{3 / 2} = \frac{3 F}{4 {E}_{S}^{∗} \sqrt{{R}^{+}}} ; a = \sqrt{{R}^{+}} {u}_{z}^{1 / 2}$

Finally, the fingertip contact area which is the surface area of a spherical cap is determined as follows: $A = 2 π {R}^{+} \left({u}_{z}/2\right) = π \left({\left({u}_{z}/2\right)}^{2}+{a}^{2}\right) = π {\left(\frac{3 RF}{4}\right)}^{2 / 3} {\left(\frac{1}{{E}_{S}^{∗}}+\frac{1}{{E}_{F}^{∗}}\right)}^{2 / 3}$

In the event that a fingertip comes into contact with a hard surface, *u_{z}* is equal to zero. Thus, the contact area is ${A}_{hard} = π \left({a}^{2}+{0}^{2}\right) = π {\left(\frac{3 RF}{4 {E}_{F}^{∗}}\right)}^{2 / 3}$ which is equivalent to the area of a circle with a radius *a*.

The following equation is applied when identifying the parameters R and ${E}_{F}^{∗}$ of the fingertip. ${A}_{norm} = \frac{A {\left(\frac{1}{{E}_{S}^{∗}}+1\right)}^{2 / 3}}{{R}^{2 / 3} {\left(\frac{1}{{E}_{S}^{∗}}+\frac{1}{{E}_{F}^{∗}}\right)}^{2 / 3}} = π {\left(\frac{3 F}{4}\right)}^{2 / 3} {\left(\frac{1}{{E}_{S}^{∗}}+1\right)}^{2 / 3}$

The expression Aₙₒᵣₘ/F^{2/3}, which is equal to $π {\left(3/4\right)}^{2 / 3} {\left(1/{E}_{S}^{∗}\right)}^{2 / 3}$, represents an objective softness metric solely based on the surface property ${E}_{S}^{∗}$. This metric is referred to as the normalized contact area spread rate.

### Stiffness conversion model

This model may be used to calculate a theoretical force applied by the target surface to the fingertip, once is known the force and the indentation depth of the device which has to render softness cues of the target (in particualr here kinestetic tactile cue). Also in this model, the force is the one applied by the fingertip on the actuator and the indentation depth is the one of the support movable part, both sensed by the sensors on board the device itself, and further intputs for the model are parameters of the fingertip and characteristics of the target. The measured stiffness of the material (the target to be rendered) depends on the mechanical properties of the indenter, such as shape, size, and hardness. As shown in Fig. 10b, different indenters give different force-displacement curves, especially when touching non-rigid surfaces. Thus, to regenerate the stiffness perceived by the fingertip, it is necessary to first estimate the stiffness based on the fingertip's physical properties. This requires converting stiffness measurements obtained with a universal testing machine equipped with a rigid spherical indenter to the corresponding stiffness that would be perceived by a soft spherical fingertip with non-linear elastic modulus.

For this conversion, it has been employed the extended Hertzian contact model ("A Fischer-Cripps, The hertzian contact surface. J. materials science 34, 129-137 (1999)."). The equation for a rigid spherical indenter is ${δ}_{R}^{3 / 2} = \frac{3 {F}_{R}}{4 {E}_{S}^{∗} \sqrt{{R}_{R}}}$ where *δ_{R}, F_{R}, R_{R},* and E*_{S}** represent the vertical displacement of the center, the applied force, the radius of the indenter, and the effective *Young's modulus* of the contact surface, respectively. As represented in Fig. 2c, for the rigid indenter, the vertical deformation of the surface, *u_{zR},* equals δ_{R}, and the vertical deformation of the indenter, ${u}_{zR}^{′}$, equals zero.

The corresponding equation for the soft fingertip is written as: ${δ}_{F}^{3 / 2} = \frac{3 {F}_{F}}{4 {E}_{T}^{∗} \sqrt{{R}_{F}}}$ where ${E}_{T}^{∗}$ is the effective *Young's modulus* of the contact, defined as $\frac{1}{{E}_{T}^{∗}} = \frac{1}{{E}_{S}^{∗}} + \frac{1}{{E}_{F}^{∗}}$ .

For the soft indenter, the vertical displacement of the center, *δ_{F}*, is the sum of the vertical deformation of the surface and the fingertip, ${δ}_{F} = {u}_{zF} + {u}_{zF}^{′}$ , and the ratio between the deformations of the surface and the fingertip is given by ${u}_{zF} / {u}_{zF}^{′} = {E}_{F}^{∗} / {E}_{S}^{∗}$.

Using this ratio and the contact models for both the rigid indenter and the soft fingertip, the following relationship between the forces exerted by the rigid indenter and the fingertip to achieve the same surface deformation is derived: ${u}_{zR} = {u}_{zF}$ ${δ}_{R}^{3 / 2} = {δ}_{F}^{3 / 2} {\left(\frac{{E}_{F}^{∗}}{{E}_{F}^{∗} + {E}_{S}^{∗}}\right)}^{3 / 2}$ $\frac{3 {F}_{R}}{4 {E}_{S}^{∗} \sqrt{{R}_{R}}} = \frac{3 {F}_{F}}{4 {E}_{T}^{∗} \sqrt{{R}_{F}}} {\left(\frac{{E}_{F}^{∗}}{{E}_{F}^{∗} + {E}_{S}^{∗}}\right)}^{3 / 2}$

From the above, the following conversion formula is determined: ${F}_{F} = {F}_{R} \left(\sqrt{\frac{{R}_{F}}{{R}_{R}}}\right) \left(\sqrt{\frac{{E}_{F} + {E}_{S}}{{E}_{F}}}\right)$ which translates the force applied by the rigid indenter that deforms the surface by a distance of δ_{R} to the force required by the soft fingertip to achieve the same deformation.

This model allows to convert the relative stiffness perceived by different fingertips when pressing on the same surface.

To summarize, the two models disclosed above (contact area model and stiffness rendering model) are used to estimate softness cues (as represented in Fig. 2b, left side). Main steps have been:
adopting a *Hertzian* contact model for non-rigid indenters on flat surfaces ("A Fischer-Cripps, The hertzian contact surface. J. materials science 34, 129-137 (1999).")). The model provides that indentation with a soft spherical indenter of radius R is equivalent to indentation with a rigid spherical indenter with a larger effective radius, *R*⁺ (Fig. 2b). This equivalence allows to estimate the geometry of the deformed soft indenter and to calculate the corresponding contact area. A non-linear fingerpad model (BM Dzidek, MJ Adams, JW Andrews, Z Zhang, SA Johnson, Contact mechanics of the human finger pad under compressive loads. J. The Royal Soc. Interface 14, 20160935 (2017)) has been incorporated into the contact mechanics model, where E_{F}* = E_{FO}*(1+ *βF*). In this equation, E_{F}*, E_{FO}*, *β*, and F represent the fingerpad's secant *Young's modulus,* effective *Young's modulus,* load coefficient, and force, respectively.

Ultimately the following contact area equation is derived $A = π {\left(\frac{3 FR}{4}\right)}^{2 / 3} {\left(\frac{1}{{E}_{S}^{∗}}+\frac{1}{{E}_{F}^{∗}}\right)}^{2 / 3}$ where A, R, and E_{S}* are the contact area, the radius of the indenter, and the effective *Young's modulus* of the surface, respectively. The effective *Young's modulus* is defined by the equation *E** = *E*/*(1* - *v*²), where E is *Young's modulus,* and *v is Poisson's ratio.* Then, the fingertip parameters have been normalized as ${A}_{norm} = π {\left(\frac{3}{4}\right)}^{2 / 3} {\left(\frac{1}{{E}_{S}^{∗}}+1\right)}^{2 / 3} \left({F}^{2 / 3}\right)$

This relationship reveals that the ratio Aₙₒᵣₘ/F^{2/3} depends solely on E_{S}*, the *Normalized contact area spread rate.* Hence, the normalized CASR is a quantitative term that depends only on surface properties and is valid for any fingertip. Finally, the stiffness that the fingertip perceives is estimated theoretically by transforming the stiffness measurements taken from a universal testing machine that uses a rigid spherical indenter. By employing the extended *Hertzian* contact model, the force required by the soft fingertip to produce a specific level of deformation has been computed. This computation is based on the force that the rigid indenter applies to achieve an equivalent deformation of the surface. ${F}_{F} = {F}_{R} \left(\sqrt{\frac{{R}_{F}}{{R}_{R}}}\right) \left(\sqrt{\frac{{E}_{F}^{∗} + {E}_{S}^{∗}}{{E}_{F}^{∗}}}\right)$ where F_{F}, F_{R} are the force applied by the fingertip and rigid indenter, R_{F}, R_{R} are the radius of the fingertip and the rigid indenter, and E_{F}, E_{S} are the effective *Young's modulus* of the fingertip and the surface.

### Model for the haptic display device

This model may be used to determine the pressure p1 and p2 to be set, respectively, into the inflatable-deflatable element and into the pouch motor in oder to render into the body part of the user a same perception of, respectively, cutaneous cue and kinestetic tactile cue as if the body part of the user was touched by the theoretical area and theoretical force determined by the previous models (the Contact area model and the Stiffness conversion model). The pressure p1 is the pressure suitable to bring a surface of the inflatable deflatable element, in particular the toroidal SPA, which has a same width of the theoretical area. The pressure p2 is the pressure suitable to apply a force from the pouch motor to the fingertip which has a same intensity of the theoretical force.

This example is base on a toroidal SPA. Therefore features such as the thickness of the toroidal SPA and the minor radius (see r in Fig. 2c) are also taken in consideration.

Based on the previous models for contact area and stiffness conversion, a model for the haptic display device is determined. The total contact area is divided into two parts: the flat contact area, A_{flat}, and the side contact area, A_{sides} (Fig. 2c, right side). Given the thinness and low *Young's modulus* of the silicone membranes of the toroidal SPA, the inflation of the toroidal SPA does not deform the fingertip. Conversely, when the toroidal SPA is not inflated, it acts as a rigid flat surface. Eq. 3 is used to calculate the flat contact area. In the model, the fingertip is assumed to have a spherical shape and the following formula to determine a spherical segment is used to compute A_{sides}. ${A}_{sides} = 2 π {Rh}_{c} = π {\left(\frac{3 RF}{4}\right)}^{2 / 3} \left({\left(\frac{1}{{E}_{T}^{∗}}\right)}^{2 / 3}-{\left(\frac{1}{{E}_{F}^{∗}}\right)}^{2 / 3}\right)$ where $\frac{1}{{E}_{T}^{∗}} = \frac{1}{{E}_{F}^{∗}} + \frac{1}{{E}_{S}^{∗}} .$ *h_{c}* denotes the height of the contact peripheral between the fingertip and toroidal SPA. Assuming that the inflated toroidal SPA has an elliptic toroidal shape, *h_{c}* is determined by solving ellipse and circle equations as follows: ${h}_{c} = h \sqrt{1 - {\left(M\right)}^{2}} and M = \left(\sqrt{{R}^{2} - {\left({h}_{c}-\sqrt{{R}^{2} - {a}^{2}}\right)}^{2}}-a-r\right) / r ,$ where
R, *a,* r, and *h* are the radius, the contact radius of the fingertip, the minor radius, and the height of the toroidal SPA, respectively.

Next, an energy-based model for the toroidal SPA's inflation under quasi-static conditions is adopted, aiming to determine desired pressure, P, to achieve target height, h.

Given that the strain energy stored in the membrane is significantly larger than the bending energy due to the low thickness and modulus of the membrane, the following is derived from the conservation of energy: $PdV = {dU}_{strain}$ where P and V are pressure and toroidal SPA volume.

The volume is calculated using the formula for a half-torus, given as V = π²(a + r)rh.

The axial strain energy Uₛₜᵣₐᵢₙ is calculated using the equation: $U = \left({T}^{2}2r\right) / \left(2EA\right) ,$ where T represents the tension force on the membrane, modeled as T = 2πrP(r + a).

Solving the energy equation, it is obtained: $P = \frac{{C}_{1} h \left(1+{C}_{2}{F}^{\frac{1}{3}}\right)}{{\left(1-{C}_{2}{F}^{\frac{1}{3}}\right)}^{2}}$ where C₁ and *C*₂ are the coefficients depending on the radius of fingertip contact, *Young's modulus,* thickness, and minor radius of the membrane (toroidal SPA).

These coefficients are identified using the results of a toroidal SPA characterization (features of the actuator).

This allows us to determine the required pressure input, P, to generate desired h, A_{sides}, and A_{contact}.

To summarize, the models disclosed above (model for the haptic display device) is used to determine pressures p1 and p2 for the inflatable deflatable element (toroidal SPA) and the pouch motor (Fig. 2b, central portion). Main steps have been the following. The contact area on haptic display device includes two components (Fig. 2c, right side): the A_{flat} represents the contact area when the finger contacts a rigid flat surface, whereas A_{side} accounts for the bulged up contact area created by the inflated toroidal SPA. The inflated thin and stretchable membrane is assumed to conform to the shape of the fingertip without causing deformation. Consequently, the estimated contact area, A_{contact}, is found: A_{contact} = A_{flat} + A_{sides}. The model computes the required pressure input to the toroidal SPA to achieve the desired side contact area.

### Results

### Identification of non-linear fingertip parameters

To identify the physical fingertip parameters R, E_{FO}, and *β*, a contact area-force experiment has been conducted. In this experiment, participants applied varying levels of force to their fingertips against a flat surface made from hard polylactic acid (PLA); the contact area between the fingertip and the surface have been recorded. Using the contact model (Eq. 11), along with the force-displacement data from the experiment, the parameters that yielded the best fit has been calculated. To demonstrate the validity, the experiment with two participants has been carried out.

### Regeneration of contact area spread rate and stiffness

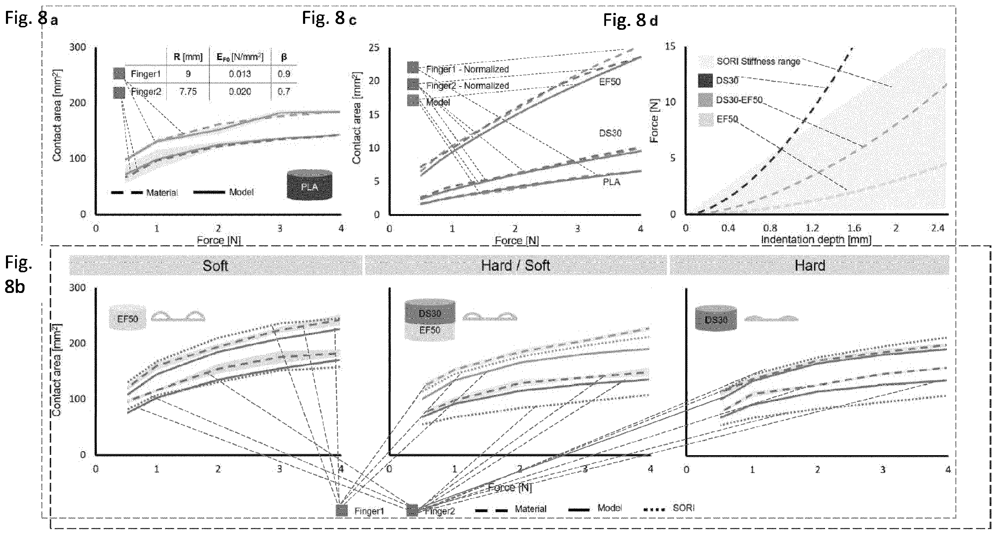

To validate the method and models for softness regeneration, a series of experiments have been designed. In the first experiment, the CASR of fingertips pressing against surfaces composed of various materials have been repeated. Then the same experiment has been repeated with SORI (the device), varying the pressure of the toroidal SPA in discrete increments. The results obtained from SORI have been interpolated to select the specific contact area corresponding to the exact target pressure value determined from the previous mapping step, enhancing the precision the approach. Subsequently the actual, model-predicted, and regenerated CASR have been compared. The results showed successful regeneration of the CASR by the toroidal SPA for three different surfaces on two fingertips. The discrepancies between the actual and recreated CASR can primarily be attributed to the assumption of a spherical shape for the fingertips and to measurement errors. Furthermore, using Eq. 12, the normalized CASR have been compared for different fingertips and materials (Fig. 8c). It was confirmed that the normalized CASR depends solely on surface properties and is identical for all primate fingertips, concluding that it is an objective softness coefficient.

Next, the stiffness of SORI has been measured and the samples used in the preceding experiments. The data indicated that SORI can render stiffness ranging from a minimum of 0.15 N/mm to a maximum of 6.52 N/mm. Additionally, the stiffness of the samples with the range of stiffness renderable by SORI has been compared. SORI accurately replicated the stiffness of the samples, except for that of DS30, which exceeded SORI's maximum renderable stiffness. Although it is feasible to further enhance SORI's stiffness capacity by utilizing a more durable pouch material and increasing pouch dimensions, the current results underscore the importance of rendering both CASR and stiffness cues on the fingertip for realistic softness recreation. Moreover, the outcomes demonstrate the efficacy of our proposed methodology and models in faithfully reproducing tactile softness cues on the fingertip.

It has therefore been shown that SORI can reproduce realistic tactile softness for both virtual and actual objects. When tasked with reproducing the tactile sensations of two materials, such as salmon and Turkish delight, SORI accurately mirrored their distinct contact behaviors. Specifically, to emulate the sensation of a salmon fillet, SORI produced a broader contact area but exerted less force compared to the sensation of Turkish delight (Fig. 9a-9b). Uniquely, SORI is capable of rendering both static and dynamic contact interactions. As an illustration, it can mimic the dynamic contact of a heart model with a pulse of 30 beat-per-minute (Fig. 9c). SORI has been touched with a rigid indenter, fixed in space and roughly the size of a fingertip, to record changes in force and contact area. As expected, the contact area and force fluctuated in coordination with the heartbeat cycles.

The Inventors carried out some experiments to evaluate SORI performance and to validate the models. For characterizing the stiffness range of SORI, tests using a universal testing machine *(Instron* 5965) have been performed, the machine being equipped with a rigid spherical indenter with a radius of 9 mm. The pressure of SORI was varied from 0 to 200 kPa in increments of 40 kPa. Furthermore, the normal force exerted by the toroidal SPA on the fingertip has been measured using a soft spherical indenter with a diameter of 18 mm made of Dragon Skin 10, designed to mimic a soft fingertip. It was mounted on the universal testing machine and positioned to tangentially touch the toroidal SPA. The pressure was incrementally increased in steps of 4 kPa up to a maximum of 24 kPa. The force at each pressure level was recorded. This procedure was replicated three times. The validity of the models has been proven. Contact area experiments were performed. The experimental setup comprised a finger stand with a linear guide, a 3D-printed finger bed set at a 30 degree angle, and a spring to reset the bed. Participants applied forces of varying magnitudes (F = [0.5,1,2,3,4]N) onto surfaces with different softness levels. The fingerprints left on ink-covered surfaces were transferred to copy paper, scanned at high resolution, and analyzed using *ImageJ* software to determine contact areas. Each material and subject underwent this process three times. The same procedure was applied to SORI, adjusting the toroidal SPA's pressure from 0 to 24 kPa in 4 kPa increments. In particular, to confirm the proposed contact area models, a controlled setup for contact area-force experiments has been designed. The setup, consisting of a finger interacting with the surface at a fixed angle of 30 degrees, used a finger stand with a linear guide, a 3D-printed finger bed, and a spring to return the bed to its initial position.

Additionally, the toroidal SPA inflation-pressure model was validated by measuring the height of its top membrane under varying pressure and force inputs. This was done by mounting the toroidal SPA on a *Nano 17 ATI* force sensor and employing a *OMRON ZW-CE1OT* high-resolution fiber displacement sensor, which was positioned using an XYZ system with an *INNO6 Automatic Precision Stage* capable of < ± 1 µm accuracy (See Fig. 10c). A GUI to manually identify the maximum height profile of the toroidal SPA along its radial line has been used. During the experiment, a fingertip with known characteristics was pressed against the toroidal SPA, applying a steady force. The SPA was inflated incrementally in 4 kPa steps, ranging from 0 to 24 kPa. The tests have been conducted with forces of 0, 0.5, 2, and 8 N and repeated each test five times. The average results were compared to the model.

The Participants to the tests was without any impairments in finger motor skills. They placed their index finger on a custom-designed finger stand equipped with a linear guide, a 3D-printed finger bed, and a spring mechanism to reset the bed to its starting position. The finger angle was consistently maintained at 30 degrees to ensure uniformity across trials. All contact area experiments using the subjects' index fingers to ensure reliable data comparison have been conducted. The participants were instructed to press samples coated with red ink to capture their fingerprints and then transfer their inked fingerprints onto paper. Each subject repeated the process three times for each force level and material tested. In the case of SORI, analogous tests have been performed, adjusting the toroidal SPA's pressure in increments of 4 kPa, ranging from O to 24 kPa. After scanning, the contact areas were quantified using the open-source ImageJ software. For data protection, all scanned fingerprints were deleted from digital media following analysis.

Advantageously, for the first time, the haptic display device as disclosed quantitatively recreates cutaneous and kinesthetic cues simultaneously on any fingertip with high fidelity and reliability. Advantageously, the haptic display device with decoupled control over softness cues and embedded multimodal sensing recreates homogeneous, non-homogeneous, stationary, and dynamic surfaces. Advantageously, the haptic display device generates personalized realistic softness cues on various fingertips by accounting for their physical properties, thus, accounting for the subjectivity in softness sensation. This comprehensive softness rendering technology has the potential to catalyze psychophysical and neuroscience studies, helping to unlock the nature of softness perception and the somatotopic representation in the brain. It will enhance understanding of cognitive processes in both humans and non-human primates by enabling controllable and repeatable experiments across different subjects. The insights gained from these findings could inform therapeutic interventions to restore lost softness sensation and stimulate technological developments in fields such as haptics, teleoperation, and telepresence. The haptic display device may support applications ranging from robot-assisted surgery to remote social interactions. It may be integrated with virtual and augmented reality technologies, to train physicians in palpation and cancer detection, to cite some. Moreover, the haptic display device may be adopted for modeling, sensing, actuation, and control for the robotics community.

## Claims

1. A multimodal haptic device (1) for rendering cutaneous and kinesthetic tactile cues of a target, including:
- an actuator (2) intended to be contacted by a body part of a user;
- a support movable unit (5) in operative connection with the actuator (2), to move the actuator (2) in one direction of a force (F) applied by the body part to the actuator (2) or in an opposite direction,
- the actuator (2) includes a contact region (3), intended to receive said force (F) by the body part, and at least one adaptive region (4), arranged at least in part around the contact region (3) and substantially flat at rest;
the device (1) **characterized by** including a controller configured to
- set a first actuation input for the actuator (2) to raise at least part of said adaptive region (4) with respect to the contact region (3), wherein, in use, an haptic softness tactile cue of the target is rendered by means of a surface of said at least part of the raised adaptive region (4) contacting the body part;
- drive the support movable unit (5) to move the actuator (2) in said at least one direction or opposite direction, wherein, in use, an haptic kinesthetic tactile cue of the target is rendered by a force (F2) applied to the body part by the actuator (2) in said opposite direction, wherein the adaptive region (4) comprises an inflatable-deflatable element, and the first actuation input is a first fluid pressure (p1) of the inflatable-deflatable element which is suitable to raise the at least part of the adaptive region (4) and
wherein
- the support movable unit (5) comprises or consists of a pouch motor arranged inside a prismatic joint (6), preferably an origami prismatic joint (6), the controller is configured to set a second fluid pressure (p2) in the pouch motor suitable to move the actuator (2) in said at least one direction or opposite direction.

2. Device (1) according to claim 1, wherein
- the controller is configured to process the first pressure (p1) and the second pressure (p2) taking in input:
- said force (F) applied by the body part of the user and an indentation depth (δ) of the actuator (2) along said direction,
- parameters of the body part;
- characteristics of the target and
characteristics of the actuator (2).

3. Device (1) according to claims 2, wherein
- said body part parameters include a radius (R) and a Young's modulus (E_{B}) of the body part,
- said characteristics of the target include a stiffness and a Young's modulus (Es) of the target (Ks),
- said inflatable-deflatable region (4) has toroidal shape and said characteristics of the actuator (2) include a thickness and a minor radius of the toroidal shape.

4. Device (1) according to claims 3, wherein
the controller is configured to
A) estimate a contact area spread rate (p), which is a width of a theoretical area of the body part to be contacted by the actuator for rendering the cutaneous cue, and a stiffness (k), which is a theoretical force to be applied to the body part for rendering the kinesthetic tactile cue, based on parameters detectable by the device, said parameters including at least the force (F) applied by the body part of the user and the indentation depth (δ) of the actuator (2), and preferably including an area of the actuator contacted by body part during use,
B) determine said first fluid pressure (p1) based on the estimated contact area spread rate (p) and determine said second fluid pressure (p2) based on the estimated stiffness (k);
C) set the first pressure (p1) as the first actuation input to raise the at least part of the adaptive region (4) and drive the support movable unit (5) by regulating said second pressure (p2) in the pouch motor;
the controller being further configured to repeat said steps A) to C) to render softness cues in real time, and to repeat detection of said force (F) applied by the body part of the user and said indentation depth (δ) of the actuator (2) at step C) and feedback forwarding them to step A).

5. Device (1) according to claim 1, wherein the actuator (2) includes a bottom membrane (10), a flat rigid mesh (11) on the bottom membrane (10), a top membrane (12) in fluidic communication with a tube for fluid flow, and a mask (13) between the bottom (10) and the top (13) membranes,
the mask includes a central hole wherein a portion of the bottom (10) membrane (10) is attached to a portion of the top membrane (13) and a separation surface around the central hole for separating a remaining portion of the bottom (10) membrane from a remaining portion of the top membrane, wherein the inflatable-deflatable region (4) is formed by said remaining portion of the top membrane (13), and wherein the central contact region (3) is formed by said portion of the top membrane (13).

6. Device (1) according to claim 5, wherein the bottom membrane (10) and the top membrane (13) are soft membranes, preferably silicon membranes.

7. Device (1) according to claim 2, including an operatively connected force sensor, to detect the force (F) applied by the body part on the device (1), and a position sensor coupled to the support movable unit (5) to detect the indentation depth (δ).

8. Device (1) according to claim 7, the force sensor is arranged between the prismatic joint (6) and the actuator (2).

9. Device (1) according to any one of claims 1 to 8, further comprising a first and second valve for controlling, respectively, a fluid flow inside the inflatable-deflatable region (4) and the pouch motor, and a third and fourth valve for controlling, respectively, a fluid flow outside the inflatable-deflatable region (4) and the pouch motor.

10. Method for rendering cutaneous and kinesthetic tactile cues of a target, including
- contacting an actuator (2) with a body part to which the cutaneous and kinesthetic tactile cues of the target have to be rendered, the actuator being arranged in operative connection with a support movable unit (5);
- moving the actuator (2) in at least one direction of a force (F) applied by said body part to the actuator (2);
the actuator (2) includes an adaptive region (4) arranged at least in part around a contact region (3), said adaptive region (4) being substantially flat at rest, before contact of said body part with the actuator (2),
**characterized in that** a controller of the device executes the following steps upon contact between the body part and the actuator (2):
- setting a first actuation input for the actuator (2) to raise at least part of the adaptive region (4) with respect to the contact region (3) wherein, in use, an haptic softness tactile cue of the target is rendered by means of a surface of said at least part of the raised adaptive region (4) contacting the user's body part;
- driving the support movable unit (5) to move the actuator (2) in said at least one direction or in an opposite direction with a force (F2), thereby providing a tactile kinesthetic cue to the body part,
wherein
- said adaptive region (4) comprises an inflatable-deflatable element and the controller sets a first pressure (p1) of a fluid in the inflatable-deflatable element to raise the adaptive region (4) and
wherein
- the support movable unit (5) comprises or consists of a pouch motor arranged inside a prismatic joint (6), preferably an origami prismatic joint (6), and the controller drives the support movable unit (5) by regulating a second pressure (p2) of air inside the pouch motor.

11. Method according to claims 10, wherein said inflatable-deflatable region (4) has toroidal shape and the toroidal shape has a thickness and a minor radius, the body part having parameters including a radius (R) and a Young's module (E_{B}), and the target having characteristics including a stiffness and a Young's module (Es) of the target (Ks), and wherein the controller is configured to
A) estimate a contact area spread rate (p), which is a width of a theoretical area of the body part to be contacted by the actuator for rendering the cutaneous cue, and a stiffness (k), which is a theoretical force to be applied to the body part for rendering the kinesthetic tactile cue, based on parameters detected by the device, said parameters including the force (F) applied by the body part of the user and the indentation depth (δ) of the actuator (2), and preferably including an area of the actuator contacted by body part during use,
B) determine said first fluid pressure (p1) based on the estimated contact area spread rate (p) and determine said second fluid pressure (p2) based on the estimated stiffness (k);
C) setting the first pressure (p1) as the first actuation input to raise the at least part of the adaptive region (4) and driving the support movable unit (5) by regulating said second pressure (p2) in the pouch motor;
the controller being further configured to repeat said steps A) to C) to render softness cues in real time, and to repeat detection of said force (F) applied by the body part of the user and said indentation depth (δ) of the actuator (2) at step C) and feedback forwarding them to step A).

12. Method according to claim 11, wherein
- the controller controls in real time the first pressure (p1) and second pressures (p2) by processing $p 1 = f \left(A, F, p, \left[{K}_{B}\right]\right) ,$ and $p 2 = f \left(F, δ, k, \left[{K}_{B}\right]\right)$ where
- F is the force applied by the body part on the device (1), as measured by a force sensor associated therewith;
- δ is a length of movement of the actuator (2) in said at least one direction due to said force applied (F), also said indentation depth δ, the indentation depth δ being measured by a position sensor, coupled to the prismatic joint (6);
- K_{B} are body part parameters, including at least one of a radius (R) and a Young's modulus (E_{B}) of the body part;
- p and k are said estimated values of contact area spread rate (p) and stiffness,
wherein said values p and k are estimated based on said body part parameters (K_{B}) and said characteristics of the target.

13. Method according to claim 11, wherein
said force F and said indentation depth δ, as detected, are feed forwarded to at step A to estimate new values of contact area spread rate (p) and a stiffness (k) of the target.

14. Method according to claim 10, wherein the target rendered is a stationary, dynamic, homogeneous or heterogeneous surface of a virtual or real object.

## Patentansprüche

1. Multimodale haptische Vorrichtung (1) zur Darstellung kutaner und kinästhetischer Tastreize auf ein Ziel, umfassend:
- einen Aktuator (2), der dazu bestimmt ist, von einem Körperteil eines Benutzers berührt zu werden;
- eine bewegliche Stützeinheit (5), die in Wirkverbindung mit dem Aktuator (2) steht, um den Aktuator (2) in eine Richtung einer von dem Körperteil auf den Aktuator (2) ausgeübten Kraft (F) oder in eine entgegengesetzte Richtung zu bewegen,
- wobei der Aktuator (2) einen Kontaktbereich (3), der dazu bestimmt ist, die Kraft (F) von dem Körperteil aufzunehmen, und mindestens einen adaptiven Bereich (4) umfasst, der zumindest teilweise um den Kontaktbereich (3) herum angeordnet und im Ruhezustand im Wesentlichen flach ist;
wobei die Vorrichtung (1) **dadurch gekennzeichnet ist, dass** sie eine Steuerung umfasst, die so konfiguriert ist, dass sie
- einen ersten Betätigungseingang für den Aktuator (2) festlegt, um zumindest einen Teil des adaptiven Bereichs (4) relativ zum Kontaktbereich (3) anzuheben, wobei im Betrieb ein haptischer Weichheits-Tastreiz des Ziels dadurch dargestellt wird, dass eine Oberfläche des zumindest angehobenen Teils des adaptiven Bereichs (4) das Körperteil kontaktiert;
- die bewegliche Stützeinheit (5) antreibt, um den Aktuator (2) in die mindestens eine Richtung oder in die entgegengesetzte Richtung zu bewegen, wobei im Betrieb ein kinästhetischer Tastreiz des Ziels durch eine Kraft (F2) dargestellt wird, die vom Aktuator (2) in der entgegengesetzten Richtung auf den Körperteil ausgeübt wird, wobei der adaptive Bereich (4) ein aufblasbares und entleerbares Element umfasst, und der erste Betätigungseingang ein erster Fluiddruck (p1) des aufblasbaren und entleerbaren Elements ist, der geeignet ist, den zumindest einen Teil des adaptiven Bereichs (4) anzuheben, und
wobei
- die bewegliche Stützeinheit (5) einen innerhalb eines prismatischen Gelenks (6), vorzugsweise eines Origami-Prismengelenks (6), angeordneten Pouch-Motor umfasst oder aus diesem besteht, die Steuerung so konfiguriert ist, dass sie einen zweiten Fluiddruck (p2) im Pouch-Motor einstellt, der geeignet ist, den Aktuator (2) in die mindestens eine Richtung oder die entgegengesetzte Richtung zu bewegen.

2. Vorrichtung (1) nach Anspruch 1, wobei
- die Steuerung so konfiguriert ist, dass sie den ersten Druck (p1) und den zweiten Druck (p2) unter Berücksichtigung folgender Eingaben verarbeitet:
- die vom Körperteil des Benutzers ausgeübte Kraft (F) und eine Eindrücktiefe (δ) des Aktuators (2) entlang der genannten Richtung,
- Parameter des Körperteils;
- Eigenschaften des Ziels und
Eigenschaften des Aktuators (2).

3. Vorrichtung (1) nach Anspruch 2, wobei
- die Körperteilparameter einen Radius (R) und einen Elastizitätsmodul (E_{B}) des Körperteils umfassen,
- die Eigenschaften des Ziels eine Steifigkeit und einen Elastizitätsmodul (Es) des Ziels (Ks) umfassen,
- der aufblasbare und entleerbare Bereich (4) eine torusförmige Gestalt aufweist und die Eigenschaften des Aktuators (2) eine Dicke und einen kleinen Radius der torusförmigen Gestalt umfassen.

4. Vorrichtung (1) nach Anspruch 3, wobei
die Steuerung so konfiguriert ist, dass sie
A) eine Kontaktflächenausbreitungsrate (p) schätzt, die der Breite einer theoretischen Fläche des Körperteils entspricht, mit dem der Aktuator zur Darstellung des kutanen Reizes kontaktiert werden soll, sowie eine Steifigkeit (k) schätzt, die eine theoretische Kraft darstellt, die auf das Körperteil ausgeübt werden muss, um den kinästhetischen Tastreiz darzustellen, basierend auf Parametern, die von der Vorrichtung erfassbar sind, wobei die Parameter mindestens die vom Körperteil des Benutzers ausgeübte Kraft (F) und die Eindrücktiefe (δ) des Aktuators (2) umfassen und vorzugsweise eine Fläche des Aktuators umfassen, die während der Verwendung vom Körperteil kontaktiert wird,
B) den ersten Fluiddruck (p1) auf der Grundlage der geschätzten Kontaktflächenausbreitungsrate (p) bestimmt und den zweiten Fluiddruck (p2) auf der Grundlage der geschätzten Steifigkeit (k) bestimmt;
C) den ersten Druck (p1) als ersten Betätigungseingang festlegt, um den zumindest einen Teil des adaptiven Bereichs (4) anzuheben, und die bewegliche Stützeinheit (5) durch Regulieren des zweiten Drucks (p2) im Beutelmotor antreibt;
wobei die Steuerung ferner so konfiguriert ist, dass sie die Schritte A) bis C) wiederholt, um Weichheits-Reize in Echtzeit darzustellen, und dass sie die Erfassung der von dem Körperteil des Benutzers ausgeübten Kraft (F) und der Eindrücktiefe (δ) des Aktuators (2) in Schritt C) wiederholt und diese als Rückmeldung an Schritt A) weiterleitet.

5. Vorrichtung (1) nach Anspruch 1, wobei der Aktuator (2) eine untere Membran (10), ein flaches, starres Netz (11) auf der unteren Membran (10), eine obere Membran (12), die in Fluidverbindung mit einem Schlauch für den Fluidstrom steht, und eine Maske (13) zwischen der unteren (10) und der oberen (13) Membran umfasst,
wobei die Maske ein zentrales Loch aufweist, wobei ein Abschnitt der unteren Membran (10) an einem Abschnitt der oberen Membran (13) befestigt ist, sowie eine Trennfläche um das zentrale Loch herum zum Trennen eines verbleibenden Abschnitts der unteren Membran (10) von einem verbleibenden Abschnitt der oberen Membran, wobei der aufblasbare und entleerbare Bereich (4) durch den genannten verbleibenden Abschnitt der oberen Membran (13) gebildet wird, und wobei der zentrale Kontaktbereich (3) durch den genannten Abschnitt der oberen Membran (13) gebildet wird.

6. Vorrichtung (1) nach Anspruch 5, wobei die untere Membran (10) und die obere Membran (13) weiche Membranen, vorzugsweise Silikonmembranen, sind.

7. Vorrichtung (1) nach Anspruch 2, umfassend einen funktionsmäßig verbundenen Kraftsensor zur Erfassung der von dem Körperteil auf die Vorrichtung (1) ausgeübten Kraft (F) und einen mit der beweglichen Stützeinheit (5) gekoppelten Positionssensor zur Erfassung der Eindrücktiefe (δ).

8. Vorrichtung (1) nach Anspruch 7, wobei der Kraftsensor zwischen dem prismatischen Gelenk (6) und dem Aktuator (2) angeordnet ist.

9. Vorrichtung (1) nach einem der Ansprüche 1 bis 8, die ferner ein erstes und ein zweites Ventil zur Steuerung eines Fluidstroms innerhalb des aufblasbaren und entleerbaren Bereichs (4) bzw. des Poch-Motors sowie ein drittes und ein viertes Ventil zur Steuerung eines Fluidstroms außerhalb des aufblasbaren und entleerbaren Bereichs (4) bzw. des Poch-Motors umfasst.

10. Verfahren zum Darstellen von kutanen und kinästhetischen Tastreizen eines Ziels, umfassend
- Kontaktieren eines Aktuators (2) mit einem Körperteil, an dem die kutanen und kinästhetischer Tastreize des Ziels dargestellt werden sollen, wobei der Aktuator in Funktionsverbindung mit einer beweglichen Stützeinheit (5) angeordnet ist;
- Bewegen des Aktuators (2) in mindestens einer Richtung einer Kraft (F), die von dem Körperteil auf den Aktuator (2) ausgeübt wird;
wobei der Aktuator (2) einen adaptiven Bereich (4) umfasst, der zumindest teilweise um einen Kontaktbereich (3) herum angeordnet ist, wobei der adaptive Bereich (4) im Ruhezustand, vor dem Kontakt des Körperteils mit dem Aktuator (2), im Wesentlichen flach ist,
**dadurch gekennzeichnet, dass** eine Steuerung der Vorrichtung bei Kontakt zwischen dem Körperteil und dem Aktuator (2) die folgenden Schritte ausführt:
- Festlegen eines ersten Betätigungseingangs für den Aktuator (2), um zumindest einen Teil des adaptiven Bereichs (4) relativ zum Kontaktbereich (3) anzuheben, wobei im Betrieb ein haptischer Weichheits-Tastreiz des Ziels mittels einer Oberfläche des zumindest angehobenen Teils des adaptiven Bereichs (4), der den Körperteil des Benutzers kontaktiert, dargestellt wird;
- Ansteuern der beweglichen Stützeinheit (5), um den Aktuator (2) in der mindestens einen Richtung oder in einer entgegengesetzten Richtung mit einer Kraft (F2) zu bewegen, wodurch ein kinästhetischer Tastreiz an das Körperteil gegeben wird,
wobei
- der adaptive Bereich (4) ein aufblasbares und entleerbares Element umfasst und die Steuerung einen ersten Druck (p1) eines Fluids in dem aufblasbaren und entleerbaren Element einstellt, um den adaptiven Bereich (4) anzuheben, und
wobei
- die bewegliche Stützeinheit (5) einen innerhalb eines prismatischen Gelenks (6), vorzugsweise eines Origami-Prismengelenks (6), angeordneten Pouch-Motor umfasst oder aus diesem besteht, und die Steuerung die bewegliche Stützeinheit (5) durch Regulierung eines zweiten Drucks (p2) der Luft im Inneren des Beutelmotors antreibt.

11. Verfahren nach den Ansprüchen 10, wobei der aufblasbare und entleerbare Bereich (4) eine torusförmige Gestalt aufweist und die torusförmige Gestalt eine Dicke und einen kleinen Radius aufweist, wobei der Körperteil Parameter aufweist, die einen Radius (R) und einen Elastizitätsmodul (E_{B}) umfassen, und das Ziel Eigenschaften aufweist, die eine Steifigkeit und einen Elastizitätsmodul (Es) des Ziels (Ks) umfassen, und wobei die Steuerung so konfiguriert ist, dass sie
A) eine Kontaktflächenausbreitungsrate (p) schätzt, die einer Breite einer theoretischen Fläche des Körperteils entspricht, mit dem der Aktuator zur Darstellung des kutanen Reizes kontaktiert werden soll, sowie eine Steifigkeit (k) schätzt, die eine theoretische Kraft darstellt, die auf das Körperteil ausgeübt werden muss, um den kinästhetischen Tastreiz darzustellen, basierend auf von der Vorrichtung erfassten Parametern, wobei diese Parameter die vom Körperteil des Benutzers ausgeübte Kraft (F) und die Eindrücktiefe (δ) des Aktuators (2) umfassen und vorzugsweise eine Fläche des Aktuators umfassen, die während der Verwendung vom Körperteil kontaktiert wird,
B) den ersten Fluiddruck (p1) auf der Grundlage der geschätzten Kontaktflächenausbreitungsrate (p) bestimmt und den zweiten Fluiddruck (p2) auf der Grundlage der geschätzten Steifigkeit (k) bestimmt;
C) den ersten Druck (p1) als ersten Betätigungseingang festlegt, um den zumindest einen Teil des adaptiven Bereichs (4) anzuheben, und die bewegliche Stützeinheit (5) durch Regulieren des zweiten Drucks (p2) im Beutelmotor ansteuert;
wobei die Steuerung ferner so konfiguriert ist, dass sie die Schritte A) bis C) wiederholt, um Weichheits-Reize in Echtzeit darzustellen, und dass sie die Erfassung der von dem Körperteil des Benutzers ausgeübten Kraft (F) und der Eindrücktiefe (δ) des Aktuators (2) in Schritt C) wiederholt und diese als Rückmeldung an Schritt A) weiterleitet.

12. Verfahren nach Anspruch 11, wobei
die Steuerung den ersten Druck (pl) und den zweiten Druck (p2) in Echtzeit durch Verarbeitung der folgenden Gleichungen regelt:
p1 = f(A, F, p, [K_{B}]), und
p2 = f(F, δ, k, [K_{B}]), wobei
- F die von dem Körperteil auf die Vorrichtung (1) ausgeübte Kraft ist, gemessen durch einen damit verbundenen Kraftsensor;
- eine Bewegungslänge des Aktuators (2) in der mindestens einen Richtung aufgrund der ausgeübten Kraft (F) ist, auch die Eindrücktiefe δ, wobei die Eindrücktiefe δ durch einen Positionssensor gemessen wird, der mit dem prismatischen Gelenk (6) gekoppelt ist;
- K_{B} Körperteilparameter sind, einschließlich mindestens eines von einem Radius (R) und einem Elastizitätsmodul (E_{B}) des Körperteils;
- p und k die geschätzten Werte der Kontaktflächenausbreitungsrate (p) und der Steifigkeit sind,
wobei die Werte p und k auf der Grundlage der Körperteilparameter (K_{B}) und der Eigenschaften des Ziels geschätzt werden.

13. Verfahren nach Anspruch 11, wobei
die erfasste Kraft F und die erfasste Eindrücktiefe δ in Schritt A weitergeleitet werden, um neue Werte für die Kontaktflächenausbreitungsrate (p) und eine Steifigkeit (k) des Ziels zu schätzen.

14. Verfahren nach Anspruch 10, wobei das dargestellte Ziel eine stationäre, dynamische, homogene oder heterogene Oberfläche eines virtuellen oder realen Objekts ist.

## Revendications

1. Dispositif haptique multimodal (1) destiné à restituer des indices tactiles cutanés et kinesthésiques d'une cible, comprenant :
- un actionneur (2) destiné à être mis en contact avec une partie du corps d'un utilisateur ;
- une unité mobile de support (5) en liaison fonctionnelle avec l'actionneur (2), pour déplacer l'actionneur (2) dans une direction d'une force (F) appliquée par la partie du corps à l'actionneur (2) ou dans une direction opposée,
- l'actionneur (2) comprend une région de contact (3), destinée à recevoir ladite force (F) par la partie du corps, et au moins une région adaptative (4), agencée au moins en partie autour de la région de contact (3) et sensiblement plate au repos ;
le dispositif (1) étant **caractérisé en ce qu'**il comprend un contrôleur configuré pour
- définir une première entrée d'actionnement pour l'actionneur (2) afin d'élever au moins une partie de ladite région adaptative (4) par rapport à la région de contact (3), dans lequel, en utilisation, un indice tactile haptique de souplesse de la cible est restitué au moyen d'une surface de ladite au moins une partie de la région adaptative (4) élevée venant en contact avec la partie du corps ;
- commander l'unité mobile de support (5) pour déplacer l'actionneur (2) dans ladite au moins une direction ou dans une direction opposée, dans lequel, en utilisation, un indice tactile haptique kinesthésique de la cible est restitué par une force (F2) appliquée à la partie du corps par l'actionneur (2) dans ladite direction opposée, dans lequel la région adaptative (4) comprend un élément gonflable-dégonflable, et la première entrée d'actionnement est une première pression de fluide (p1) de l'élément gonflable-dégonflable qui est apte à élever au moins une partie de la région adaptative (4) et
dans lequel
- l'unité mobile de support (5) comprend ou est constituée par un moteur à poche agencé à l'intérieur d'une articulation prismatique (6), de préférence une articulation prismatique origami (6), le contrôleur étant configuré pour définir une seconde pression de fluide (p2) dans le moteur à poche apte à déplacer l'actionneur (2) dans ladite au moins une direction ou dans une direction opposée.

2. Dispositif (1) selon la revendication 1, dans lequel
- le contrôleur est configuré pour traiter la première pression (p1) et la seconde pression (p2) en prenant en entrée :
- ladite force (F) appliquée par la partie du corps de l'utilisateur et une profondeur d'indentation (δ) de l'actionneur (2) le long de ladite direction,
- des paramètres de la partie du corps ;
- des caractéristiques de la cible et
des caractéristiques de l'actionneur (2).

3. Dispositif (1) selon la revendication 2, dans lequel
- lesdits paramètres de la partie du corps comprennent un rayon (R) et un module de Young (E_{B}) de la partie du corps,
- lesdites caractéristiques de la cible comprennent une rigidité et un module de Young (Es) de la cible (Ks),
- ladite région gonflable-dégonflable (4) présente une forme toroïdale et lesdites caractéristiques de l'actionneur (2) comprennent une épaisseur et un rayon mineur de la forme toroïdale.

4. Dispositif (1) selon la revendication 3, dans lequel
le contrôleur est configuré pour
A) estimer un taux d'étalement de l'aire de contact (p), qui est une largeur d'une aire théorique de la partie du corps devant être contactée par l'actionneur pour restituer l'indice cutané, et une rigidité (k), qui est une force théorique devant être appliquée à la partie du corps pour restituer l'indice tactile kinesthésique, sur la base de paramètres détectables par le dispositif, lesdits paramètres comprenant au moins la force (F) appliquée par la partie du corps de l'utilisateur et la profondeur d'indentation (δ) de l'actionneur (2), et comprenant de préférence une aire de l'actionneur contactée par la partie du corps pendant l'utilisation,
B) déterminer ladite première pression de fluide (p1) sur la base du taux d'étalement de l'aire de contact (p) estimé et déterminer ladite seconde pression de fluide (p2) sur la base de la rigidité (k) estimée ;
C) définir la première pression (p1) comme la première entrée d'actionnement pour élever au moins une partie de la région adaptative (4) et commander l'unité mobile de support (5) en régulant ladite seconde pression (p2) dans le moteur à poche ;
le contrôleur étant en outre configuré pour répéter lesdites étapes A) à C) afin de restituer des indices de souplesse en temps réel, et pour répéter la détection de ladite force (F) appliquée par la partie du corps de l'utilisateur et de ladite profondeur d'indentation (δ) de l'actionneur (2) à l'étape C) et les transmettre en retour à l'étape A).

5. Dispositif (1) selon la revendication 1, dans lequel l'actionneur (2) comprend une membrane inférieure (10), un maillage rigide plat (11) sur la membrane inférieure (10), une membrane supérieure (12) en communication fluidique avec un tube pour un écoulement de fluide, et un masque (13) entre les membranes inférieure (10) et supérieure (13),
le masque comprend un trou central dans lequel une portion de la membrane(10) inférieure (10) est attachée à une portion de la membrane supérieure (13) et une surface de séparation autour du trou central pour séparer une portion restante de la membrane inférieure (10) d'une portion restante de la membrane supérieure, dans lequel la région gonflable-dégonflable (4) est formée par ladite portion restante de la membrane supérieure (13), et dans lequel la région centrale de contact (3) est formée par ladite portion de la membrane supérieure (13).

6. Dispositif (1) selon la revendication 5, dans lequel la membrane inférieure (10) et la membrane supérieure (13) sont des membranes souples, de préférence des membranes en silicium.

7. Dispositif (1) selon la revendication 2, comprenant un capteur de force connecté fonctionnellement, pour détecter la force (F) appliquée par la partie du corps sur le dispositif (1), et un capteur de position couplé à l'unité mobile de support (5) pour détecter la profondeur d'indentation (δ).

8. Dispositif (1) selon la revendication 7, le capteur de force étant agencé entre l'articulation prismatique (6) et l'actionneur (2).

9. Dispositif (1) selon l'une quelconque des revendications 1 à 8, comprenant en outre une première et une deuxième vanne pour commander, respectivement, un écoulement de fluide à l'intérieur de la région gonflable-dégonflable (4) et du moteur à poche, et une troisième et une quatrième vanne pour commander, respectivement, un écoulement de fluide à l'extérieur de la région gonflable-dégonflable (4) et du moteur à poche.

10. Procédé de restitution d'indices tactiles cutanés et kinesthésiques d'une cible, comprenant
- la mise en contact d'un actionneur (2) avec une partie du corps à laquelle les indices tactiles cutanés et kinesthésiques de la cible doivent être restitués, l'actionneur étant agencé en liaison fonctionnelle avec une unité mobile de support (5) ;
- le déplacement de l'actionneur (2) dans au moins une direction d'une force (F) appliquée par ladite partie du corps à l'actionneur (2) ;
l'actionneur (2) comprend une région adaptative (4) agencée au moins en partie autour d'une région de contact (3), ladite région adaptative (4) étant sensiblement plate au repos, avant le contact de ladite partie du corps avec l'actionneur (2),
**caractérisé en ce qu'**un contrôleur du dispositif exécute les étapes suivantes lors du contact entre la partie du corps et l'actionneur (2) :
- définir une première entrée d'actionnement pour l'actionneur (2) afin d'élever au moins une partie de la région adaptative (4) par rapport à la région de contact (3) dans lequel, en utilisation, un indice tactile haptique de souplesse de la cible est restitué au moyen d'une surface de ladite au moins une partie de la région adaptative (4) élevée venant en contact avec la partie du corps de l'utilisateur ;
- commander l'unité mobile de support (5) pour déplacer l'actionneur (2) dans ladite au moins une direction ou dans une direction opposée avec une force (F2), fournissant ainsi un indice tactile kinesthésique à la partie du corps,
dans lequel
- ladite région adaptative (4) comprend un élément gonflable-dégonflable et le contrôleur définit une première pression (p1) d'un fluide dans l'élément gonflable-dégonflable pour élever la région adaptative (4) et
dans lequel
- l'unité mobile de support (5) comprend ou est constituée par un moteur à poche agencé à l'intérieur d'une articulation prismatique (6), de préférence une articulation prismatique origami (6), et le contrôleur commande l'unité mobile de support (5) en régulant une seconde pression (p2) d'air à l'intérieur du moteur à poche.

11. Procédé selon la revendication 10, dans lequel ladite région gonflable-dégonflable (4) présente une forme toroïdale et la forme toroïdale présente une épaisseur et un rayon mineur, la partie du corps ayant des paramètres comprenant un rayon (R) et un module de Young (E_{B}), et la cible ayant des caractéristiques comprenant une rigidité et un module de Young (Es) de la cible (Ks), et dans lequel le contrôleur est configuré pour
A) estimer un taux d'étalement de l'aire de contact (p), qui est une largeur d'une aire théorique de la partie du corps devant être contactée par l'actionneur pour restituer l'indice cutané, et une rigidité (k), qui est une force théorique devant être appliquée à la partie du corps pour restituer l'indice tactile kinesthésique, sur la base de paramètres détectés par le dispositif, lesdits paramètres comprenant la force (F) appliquée par la partie du corps de l'utilisateur et la profondeur d'indentation (δ) de l'actionneur (2), et comprenant de préférence une aire de l'actionneur contactée par la partie du corps pendant l'utilisation,
B) déterminer ladite première pression de fluide (p1) sur la base du taux d'étalement de l'aire de contact (p) estimé et déterminer ladite seconde pression de fluide (p2) sur la base de la rigidité (k) estimée ;
C) définir la première pression (p1) comme la première entrée d'actionnement pour élever au moins une partie de la région adaptative (4) et commander l'unité mobile de support (5) en régulant ladite seconde pression (p2) dans le moteur à poche ;
le contrôleur étant en outre configuré pour répéter lesdites étapes A) à C) afin de restituer des indices de souplesse en temps réel, et pour répéter la détection de ladite force (F) appliquée par la partie du corps de l'utilisateur et de ladite profondeur d'indentation (δ) de l'actionneur (2) à l'étape C) et les transmettre en retour à l'étape A).

12. Procédé selon la revendication 11, dans lequel
- le contrôleur commande en temps réel la première pression (p1) et la seconde pression (p2) en traitant $p 1 = f \left(A, F, p, \left[{K}_{B}\right]\right) ,$ et $p 2 = f \left(F, δ, k, \left[{K}_{B}\right]\right)$ où
- F est la force appliquée par la partie du corps sur le dispositif (1), telle que mesurée par un capteur de force associé à celui-ci ;
- δ est une longueur de déplacement de l'actionneur (2) dans ladite au moins une direction en raison de ladite force appliquée (F), également ladite profondeur d'indentation δ, la profondeur d'indentation δ étant mesurée par un capteur de position, couplé à l'articulation prismatique (6) ;
- K_{B} sont des paramètres de la partie du corps, comprenant au moins l'un parmi un rayon (R) et un module de Young (E_{B}) de la partie du corps ;
- p et k sont lesdites valeurs estimées du taux d'étalement de l'aire de contact (p) et de la rigidité,
dans lequel lesdites valeurs p et k sont estimées sur la base desdits paramètres de la partie du corps (K_{B}) et desdites caractéristiques de la cible.

13. Procédé selon la revendication 11, dans lequel
ladite force F et ladite profondeur d'indentation δ, telles que détectées, sont transmises en retour à l'étape A afin d'estimer de nouvelles valeurs du taux d'étalement de l'aire de contact (p) et d'une rigidité (k) de la cible.

14. Procédé selon la revendication 10, dans lequel la cible restituée est une surface stationnaire, dynamique, homogène ou hétérogène d'un objet virtuel ou réel.
